# EUROPEAN PATENT SPECIFICATION

(11) **EP 2 409 470 B1**
(45) Date of publication and mention of the grant of the patent: **20.02.2013**
(21) Application number: 09779158.6
(22) Date of filing: 16.03.2009
(51) Int. Cl.: H04L 29/06, H04M 3/436

(54) **COMMUNICATION CONNECTION ESTABLISHMENT CONTROL FOR PREVENTING UNSOLICITATED COMMUNICATION**
KOMMUNIKATIONSVERBINDUNGS- HERSTELLUNGSSTEUERUNG ZUR VERHINDERUNG VON UNAUFGEFORDERTER KOMMUNIKATION
MÉCANISME DE COMMANDE D'ÉTABLISSEMENT D'UNE CONNEXION DE COMMUNICATION DANS LE BUT D'EMPÊCHER UNE COMMUNICATION NON SOUHAITÉE

(43) Date of publication of application: 25.01.2012
(60) Divisional application: 11184568.1
(73) Proprietor: Nokia Siemens Networks Oy, 02610 Espoo (FI)
(72) Inventor: HORN, Guenther, 80331 München (DE); JAEGER, Bernd, 81373 München (DE); CHARZINSKI, Joachim, 81825 München (DE); BUECKER, Wolfgang, 85579 Neubiberg (DE)
(86) International application number: PCT/EP2009/053068
(87) International publication number: WO 2010/105663

(56) References cited:
- US-A1- 2006 056 317
- US-A1- 2007 101 144
- US-A1- 2007 177 615
- US-A1- 2008 175 226
- MACINTOSH R ET AL: "Detection and mitigation of spam in IP telephony networks using signaling protocol analysis" ADVANCES IN WIRED AND WIRELESS COMMUNICATION, 2005 IEEE/SARNOFF SYMPOS IUM ON PRINCETON, NEW JERSEY, USA APRIL 18-19, 2005, PISCATAWAY, NJ, USA,IEEE, 18 April 2005 (2005-04-18), pages 49-52, XP010793744 ISBN: 978-0-7803-8854-3

## Description

### BACKGROUND OF THE INVENTION

### Field of the invention

The present invention relates to a mechanism for controlling a communication connection establishment to a subscriber, and to a management system used to configure a corresponding communication connection establishment control. In particular, the present invention is related to a communication connection establishment control providing protection against unsolicited communications (UC), such as SPAM over Internet Telephony (SPIT), and to a management system for configuring a corresponding control.

### Related prior art

In the last years, an increasing extension of communication networks, e.g. of wire based communication networks, such as the Integrated Services Digital Network (ISDN), and Digital Subscriber Line (DSL) access to the Internet, or wireless communication networks, such as the cdma2000 (code division multiple access) system, cellular 3rd generation (3G) communication networks like the Universal Mobile Telecommunications System (UMTS), cellular 2nd generation (2G) communication networks like the Global System for Mobile communications (GSM), the General Packet Radio System (GPRS), the Enhanced Data Rates for Global Evolutions (EDGE), or other wireless communication system, such as the Wireless Local Area Network (WLAN) or Worldwide Interoperability for Microwave Access (WiMax), took place all over the world. Various organizations, such as the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMax Forum and the like are working on standards for telecommunication network and access environments.

Generally, for properly establishing and handling a communication connection between network elements such as a user equipment (UE) and another communication equipment or user equipment, a database, a server, etc., one or more intermediate network elements such as control network elements, support nodes or service nodes are involved which may belong to different communication network.

For example, Voice over IP (VoIP) represents a new technology for delivery of voice communications over Internet Protocol (IP) networks such as the Internet or other packet-switched networks, including all the networks mentioned above, with the exception of ISDN. One embodiment of a VoIP network is an IMS network, as defined by 3GPP. VoIP networks in general, and IMS in particular, may be used in a mixed wireline-wireless environment, which is sometimes also called a Fixed-Mobile-convergence environment. VoIP offers a possibility for easy and also cheap access to speech communications. However, by such new transmission technologies like VoIP, there is also a problem that undesired features are taken over from the IP domain to the telecommunication domain. One of these features is the transmission of unsolicited communications to subscribers which is also known as "spamming".

In case of VoIP, such transmission of unsolicited communications to users, especially VoIP users, is also known as SPAM over Internet Telephony (SPIT). SPIT/UC can be defined as a bulk unsolicited set of session initiation attempts, attempting to establish a voice, video, instant messaging or other type of communication session. If the user should answer, the calling side, also referred to as "spammer", proceeds to relay the message. Usually SPIT/UC is perceived as nuisance by the users.

US patent application US2007/0101144 relates to SPIT mitigation.

This problem is already well-known from Email SPAM which is seen as a huge plague today. The fear is that SPIT/UC will become a similar problem for communication connections concerning voice calls or the like, especially in the context of VoIP, since costs for VoIP are decreasing, the customer base for VoIP is growing significantly and Personal Computers (PCs) or the like can be used to generate large amounts of automated VoIP calls. These are the main pre-requisites for an increased SPIT/UC probability.

Therefore, there are several attempts to decrease this sort of threat for VoIP networks cumulating in a variety of standardization efforts that are currently ongoing in ETSI, IETF, ITU, 3GPP and the like.

In addition, it has to be considered that a consequence of increasing SPIT/UC may be that the acceptance of VoIP could be affected. Compared to Email SPAM, the impairment of SPIT/UC to the user is regarded to be even higher, because voice, video, etc. are real-time media that require immediate reaction of the user (in contrast to Email that is read at the time the user likes) and the nuisance has already taken place when the user reacts on the ringing tone and accepts the call (while Email offers the possibility to perform an offline content analysis with a subsequent filtering). Therefore VoIP vendors as well as VoIP operators show an increasing interest in SPIT/UC prevention techniques.

However, Voice SPAM or unsolicited communication is by its nature not restricted to VoIP networks. Due to the link of VoIP networks to other networks based on a different transmission technology, such as legacy networks like e.g. PSTN (Public Switched Telephony Network), SPIT/UC may also affect users of such other networks. Hence, although the SPIT/UC source may originate in a VoIP network, users of legacy networks can be affected, for example since VoIP-to-fixed-network flat rates diminish the cost for SPIT/UC calls significantly.

For handling annoying telephone calls, there have been proposed several service features of so-called supplementary services, which comprise, for example, SCR (selective call rejection, blacklisting), SCA (selective call acceptance, white listing), ACR (anonymous call rejection) or malicious call identification / tracing (MCID). In addition, also EACR (enhanced anonymous call rejection) is proposed which allows callers to decide between giving up their privacy, entering a PIN or speaking their name when calling a callee with ACR enabled. While malicious call tracing is intended for special purposes only, SCR or SCA can be used by subscribers to blacklist certain callers (SCR) or to allow connections only from white listed callers (SCA). In practice, however, these and further features are hard or impossible to combine and thus of little value to voice service subscribers. Furthermore, the setting and configuration of such services is complicated and the effects thereof on communication connections or the reachability of users are sometimes difficult to understand for a subscriber.

Regarding the handling of SPIT/UC, there are presently made basically two different approaches, i.e. a non-technical approach and by means of technical measures.

Usually, a combination of non-technical countermeasures on different levels is used against SPIT/UC:
- legislation (may be different per country),
- measures of regulative authorities so as to block known SPIT/UC sources
- measures based on operator's contract conditions (e.g. no commercial usage of flat rates) that allow short-term contract cancellation if users violate these contract conditions.

The disadvantage of the first two countermeasures (legislation, regulative authorities) is that the reaction is complicated and slow. The third countermeasure (operator's contract conditions) may be effective, but the difficulty for the operators is to prove the misuse of their contract conditions.

Regarding the technical approach to tackle the SPIT/UC problem, for example, VoIP networks may in future be equipped with servers that try to evaluate a SPIT/UC probability (SPIT/UC score) for each call by analyzing, for example, the SIP (Session Initiation Protocol) signaling traffic and user feedbacks. By means of this, the network or the user can possibly react according to the analysis. These SPIT/UC servers are currently on a research or prototype level. One example is the so-called SEAL system from NEC which proposes usage of a SPIT/UC server that provides a three-step approach: Identification of SPIT/UC - Marking of SPIT/UC - Reaction on SPIT/UC. Another example is the so-called SAVIT (SPAM Avoidance for Voice over Internet Telephony) system from Siemens, which pursues a similar concept as SEAL (a SPIT/UC server analyzes the SIP signaling traffic in parallel to the SIP server and builds up a SPIT/UC database, based on statistical analysis of signaling traffic and direct user feedback; the result is a SPIT/UC probability (SPIT/UC score) that can be either provided to the intended recipient of the call or it can be the input for a network-based decision unit that decides to either block the call or to put it through).

However, even though these technical approaches may provide countermeasures against SPIT/UC, there are some problems remaining. For example, these systems are related only to the SPIT/UC prevention in VoIP networks so that users of other networks such as the legacy networks impaired potentially as well by VoIP originated SPIT/UC can not be protected thereby. Furthermore, these approaches require changes in SIP signaling to transport SPIT/UC related signaling data and possibly changes in VoIP network interface definitions which makes the implementation thereof difficult. It has also to be considered that besides technical and architectural questions there are also legal aspects affected by these approaches, such as privacy protection (is the operator willing or allowed to indicate towards another operator that a specific user is deemed to be a SPIT/UC source) or liability problems (if an operator B blocks an important call, based on a false SPIT/UC decision of an operator A, legal implications may follow).

### SUMMARY OF THE INVENTION

Thus, it is an object of the invention to provide an improved communication connection establishment control providing protection against unsolicited communications. In particular, it is an object of the invention to provide an apparatus, a method and a computer program product by means of which a communication connection establishment can be controlled such that unsolicited communications are prevented irrespective of the type of the communication network of a subscriber, such as a PSTN (Public Switched Telecommunications Network). In addition, it is an object of the invention to provide a subscriber or end user a possibility to create an own personalized, sophisticated communication connection establishment control profile (or SPIT/UC prevention profile) which is convenient to handle for users and does not negatively affect user experience. In addition, it is an object of the invention to provide a management system allowing an easy configuration of the communication connection establishment control profile (or SPIT/UC prevention profile) for the user and a flexible and sophisticated setting of communication connection establishment control profiles (or SPIT/UC prevention profiles) schemes for network operators.

These objects are achieved by the measures defined in the attached claims.

In particular, according to one example of the proposed solution, there is provided, for example, a method comprising setting a communication connection establishment control profile for a subscriber for handling unsolicited communication, receiving a setup request for a communication connection from a calling party, determining whether an identification element of the requesting calling party matches a stored identification of calling parties to be rejected, indicated in the communication connection establishment control profile, and determining whether the identification element of the requesting calling party matches a stored identification of calling parties allowed to be connected to the subscriber, indicated in the communication connection establishment control profile, sending, if the results of the determining are negative, a request to the calling party for returning a first authentication for allowing the establishment of the communication connection, said first authentication being indicated in the communication connection establishment control profile, and checking whether the first authentication is received.

Furthermore, according to one example of the proposed solution, there is provided, for example, an apparatus comprising a processor configured to set a communication connection establishment control profile for a subscriber for handling unsolicited communication, a receiver configured to receive a setup request for a communication connection from a calling party, a blacklist processor portion configured to determine whether an identification element of the requesting calling party matches a stored identification of calling parties to be rejected, indicated in the communication connection establishment control profile, a whitelist processor portion configured to determine whether the identification element of the requesting calling party matches a stored identification of calling parties allowed to be connected to the subscriber, indicated in the communication connection establishment control profile, a transmitter configured to send, if the determination results of the blacklist and whitelist processor portions are negative, a request to the calling party for returning a first authentication for allowing the establishment of the communication connection, said first authentication being indicated in the communication connection establishment control profile, and an authentication processor portion configured to check whether the first authentication is received.

According to further refinements, these examples may comprise one or more of the following features:
- in case the first authentication is not received, sending of an announcement may be initiated on the basis of information indicated in the communication connection establishment control profile to the calling party, said announcement indicating information usable for deriving a second authentication for allowing the establishment of the communication connection;
- the communication connection to the calling party may be ended after sending the announcement;
- at least one of rejecting the request for the establishment of the communication connection when the result of the determining of whether the identification element of the requesting calling party matches a stored identification of calling parties to be rejected is positive, and allowing the establishment of the communication connection to the subscriber when the result of the determining of whether the identification element of the requesting calling party matches a stored identification of calling parties allowed to be connected to the subscriber is positive, may be executed;
- when sending the announcement, the calling party may be offered to store an identification information of the calling party and/or a message for the subscriber, and when the offer is accepted by the calling party, the identification information and/or the message may be stored for a retrieval by the subscriber;
- the check whether the first authentication is received may comprise at least one of detecting whether the first authentication is received until a preset time is elapsed, and determining whether the received first authentication matches authentication data indicated by the communication connection establishment control profile, wherein the first authentication is defined to be not received when the preset time is elapsed without receiving the first authentication or when the received first authentication does not match the authentication data;
- the first authentication and the second authentication may be character based authentication codes and the announcement may be a speech message;
- the setting of the communication connection establishment control profile may comprise at least one of providing lists specifying one or more stored identifications of calling parties to be rejected and/or one or more identifications of calling parties allowed to be connected, providing data for specifying the first authentication and/or the second authentication, and providing data for generating the announcement;
- further services may comprise at least one of detecting whether the calling party provides identification information usable for identifying the calling party, and, when the identification information is not detected, rejecting the request for the establishment of the communication connection, checking whether an instruction to block external communication connection establishment attempts is present, and if the instruction is present, rejecting the request for the establishment of the communication connection, and checking whether a specific communication connection forwarding instruction is present, and, when the specific communication connection forwarding instruction is present, handling the request for the establishment of the communication connection in accordance with the specific communication connection forwarding instruction, wherein the specific communication connection forwarding instruction may comprise at least one of a permission to establish a communication connection to the subscriber only at predetermined periods of time, an instruction to setup the communication connection to another destination, an instruction to setup the communication connection to another destination only at predetermined periods of time, and an instruction to send the announcement in case the result of the determining of whether the identification element of the requesting calling party matches a stored identification of calling parties allowed to be connected to the subscriber is positive; then, the setting of the communication connection establishment control profile may comprise at least one of providing lists specifying one or more stored identifications of calling parties to be rejected and/or one or more identifications of calling parties allowed to be connected, providing data for specifying the first authentication and/or the second authentication, providing data for generating the announcement, specifying the predetermined periods of time, and providing data for specifying the other destination;
- the setting of the communication connection establishment control profile may further comprise receiving instructions and/or data by an interface comprising a graphical user interface part for assigning at least one of activation commands and parameters for the communication connection establishment control profile, and implementing the instructions and/or data in a communication connection establishment control scheme using one or more supplementary services of a communication network.

Moreover, according to another example of the proposed solution, there is provided, for example, a method comprising providing a plurality of services specified for a communication connection establishment control for handling unsolicited communication, establishing a preliminary communication connection establishment control scheme by defining and combining selected ones of the services, providing an interface for a subscriber comprising means for inputting instructions and/or data for generating a communication connection establishment control profile for the subscriber based on the preliminary communication connection establishment control scheme.

In addition, according to an example of the proposed solution, there is provided, for example, an apparatus comprising a first processor portion configured to provide a plurality of services specified for a communication connection establishment control for handling unsolicited communication, a second processor portion configured to establish a preliminary communication connection establishment control scheme by defining and combining selected ones of the services, a third processor portion configured to provide an interface for a subscriber comprising means for inputting instructions and/or data for generating a communication connection establishment control profile for the subscriber based on the preliminary communication connection establishment control scheme.

According to further refinements, these examples may comprise one or more of the following features:
- the establishing may further comprise combining the selected ones of the services in a specific order for execution;
- there may be further comprised functions or portions for receiving instructions and/or data input in the interface by the subscriber, determining the communication connection establishment control profile for the subscriber on the basis of the input instructions and/or data, configuring a final communication connection establishment control scheme to be used for the subscriber on the basis of the communication connection establishment control profile, and implementing the final communication connection establishment control scheme for a request for establishing a communication connection to the subscriber;
- the services may comprise supplementary services including at least one determining whether an identification element of a calling party requesting an establishment of a communication connection matches a stored identification of calling parties to be rejected, indicated in the communication connection establishment control profile, determining whether the identification element of the requesting calling party matches a stored identification of calling parties allowed to be connected to the subscriber, indicated in the communication connection establishment control profile, sending, if the results of the determining are negative, a request to the calling party for returning a first authentication for allowing the establishment of the communication connection, said first authentication being indicated in the communication connection establishment control profile, checking whether the first authentication is received, and in case the first authentication is not received, sending an announcement on the basis of information indicated in the communication connection establishment control profile to the calling party, said announcement indicating information usable for deriving a second authentication for allowing the establishment of the communication connection; - the supplementary services may be for at least one of GSM, ISDN, UMTS, and VoIP networks, such as IMS, and/or the supplementary services may comprise at least one of SCA, SCR, ACR, eACR, DND, CF.

- the services may further comprise at least one of rejecting the request for the establishment of the communication connection when the result of the determining of whether the identification element of the requesting calling party matches a stored identification of calling parties to be rejected is positive, and allowing the establishment of the communication connection to the subscriber when the result of the determining of whether the identification element of the requesting calling party matches a stored identification of calling parties allowed to be connected to the subscriber is positive;
- the services may further comprise offering, when sending the announcement, the calling party to store an identification information of the calling party and/or a message for the subscriber, and when the offer is accepted by the calling party, storing the identification information and/or the message for a retrieval by the subscriber;
- the services may further comprise at least one of detecting whether the first authentication is received until a preset time is elapsed, and determining whether the received first authentication matches authentication data indicated by the communication connection establishment control profile, wherein the first authentication is defined to be not received when the preset time is elapsed without receiving the first authentication or when the received first authentication does not match the authentication data;
- the first authentication and the second authentication may be character based authentication codes and the announcement may be a speech message;
- the interface may comprise means for inputting instructions and/or data for generating the communication connection establishment control profile by specifying at least one of one or more identifications of calling parties to be rejected and/or one or more identifications of calling parties allowed to be connected, the first authentication and/or the second authentication, and a source and/or a content of the announcement;
- the services may further comprise at least one of detecting whether the calling party provides identification information usable for identifying the calling party, and, when the identification information is not detected, rejecting the request for the establishment of the communication connection, checking whether an instruction to block external communication connection establishment attempts is present, and if the instruction is present, rejecting the request for the establishment of the communication connection, and checking whether a specific communication connection forwarding instruction is present, and, when the specific communication connection forwarding instruction is present, handling the request for the establishment of the communication connection in accordance with the specific communication connection forwarding instruction, wherein the specific communication connection forwarding instruction may comprise at least one of a permission to establish a communication connection to the subscriber only at predetermined periods of time, an instruction to setup the communication connection to another destination, an instruction to setup the communication connection to another destination only at predetermined periods of time, and an instruction to send the announcement in case the result of the determining of whether the identification element of the requesting calling party matches a stored identification of calling parties allowed to be connected to the subscriber is positive; then, the interface may comprise means for inputting instructions and/or data for generating the communication connection establishment control profile by specifying at least one of one or more identifications of calling parties to be rejected and/or one or more identifications of calling parties allowed to be connected, the first authentication and/or the second authentication, a source and/or a content of the announcement, the predetermined periods of time, and the other destination;
- there may be further provided a function or portion for allocating price information to parts of the interface related to one or more of the selected ones of the services;
- the interface may comprise a graphical user interface part for inputting the instructions and/or data for generating a communication connection establishment control profile and for assigning at least one of activation commands and parameters for parts of the communication connection establishment control profile.

Furthermore, according to another example of the proposed solution, there is provided, for example, a graphical user interface comprising an indication portion configured to indicate a template of a preliminary communication connection establishment control scheme comprising a combination of a plurality of services specified for a communication connection establishment control for handling unsolicited communication, one or more input portions configured to input instructions and/or data for generating a communication connection establishment control profile of a subscriber based on the preliminary communication connection establishment control scheme, a receiver configured to receive instructions and/or data input in the one or more input portions by the subscriber, a determiner configured to determine the communication connection establishment control profile for the subscriber on the basis of the input instructions and/or data by assigning activation commands and/or parameters to the communication connection establishment control profile, and a transmitter configured to transmit the communication connection establishment control profile to a management system configuring a final communication connection establishment control scheme to be used for the subscriber on the basis of the transmitted communication connection establishment control profile.

Moreover, according to another example of the proposed solution, there is provided, for example, a computer program product for a computer, comprising software code portions for performing the steps of any of above defined methods, or for generating a graphical user interface as defined above, when said product is run on the computer. The computer program product may comprise a computer-readable medium on which said software code portions are stored. Furthermore, the computer program product may be directly loadable into the internal memory of the computer and/or transmittable via a network by means of at least one of upload, download and push procedures.

By virtue of the proposed solutions, it is possible to provide a communication connection establishment control or UC prevention by using supplementary services which are defined for legacy as well as for VoIP networks and can therefore be used in all networks to protect against SPIT/UC. These services are standardized and are running in the installed network base so that they can be used immediately and require no or only some small adaptations. Furthermore, protocol extensions are not necessary so that the proposed communication connection establishment control may be implemented also in existing network equipment or servers without extensive changes. For example, no changes in SIP or other signaling and in VoIP network interface definitions are required.

The proposed communication connection establishment control for UC prevention is in particular usable for preventing SPIT/UC from calling machines. However, also UC originating from natural persons can be limited due to additional effort required to be taken by the UC caller.

The proposed UC prevention measures apply both to traditional PSTN/ISDN networks as well as to modern VoIP/IP/NGN (Next Generation) networks, wherein in all network types basically the same mechanisms and procedures are used. Thus, the invention works advantageously not only in one network type environment but also in a mixed environment consisting of both PSTN/ISDN and VoIP/IP/NGN, thereby detecting/blocking UC/SPIT in either network. This yields direct value-add to users of arbitrary networks, e.g. either on the PSTN/ISDN or on the VoIP/IP/NGN network segment.

More generally, by means of the present invention, a reduced network usage from UC/SPIT is achieved, resulting in a reduced processing load in network nodes. Furthermore, subscribers can reduce SPIT/UC with little extra processing. Thus, the present invention offers a useful measure against SPIT/UC so that network operators/carriers providing this anti-SPIT/UC procedure as a network service feature can increase their ROI (Return Of Investment), either by charging corresponding services or by increasing the attraction of their offer.

In addition, the proposed communication connection establishment control (or UC prevention) avoids also possible implications of legal aspects for operators because the user configures and manages his personal UC prevention profile and is therefore responsible for the consequences.

By means of the proposed management system, it is possible to obtain a personally tailored SPIT/UC prevention profile for a subscriber enabling the user to create a SPIT/UC protection according to his personal needs and ideas. On the other hand, the proposed management system provides an operator the possibility to control which services are offered or to be used for the UC prevention profile, wherein also a consistency of the offered (and user selected) services can be ensured. Moreover, the management system provides a high flexibility for configuration and maintenance of the UC prevention. In addition, comprehensible input and setting options can be provided to the subscriber, in particular by the graphical user interface (also referred to as GUI), so that the communication connection establishment control (or UC prevention) can gain a high degree of acceptance.

The above and still further objects, features and advantages of the invention will become more apparent upon referring to the description and the accompanying drawings.

### BRIEF DESCRIPTION OF THE DRAWINGS

Fig. 1 shows a diagram illustrating a communication connection establishment control scenario with UC prevention according to one example of an embodiment of the invention.
Fig. 2 shows a block circuit diagram of a network element comprising functions of the communication connection establishment control according to one example of an embodiment of the invention.
Fig. 3 shows a flowchart describing a process flow of a communication connection establishment control with UC prevention according to one example of an embodiment of the invention.
Fig. 4 shows a signaling diagram illustrating a first example of a call setup process based on the communication connection establishment control scenario with UC prevention according to Fig. 1.
Fig. 5 shows a signaling diagram illustrating a second example of a call setup process based on the communication connection establishment control scenario with UC prevention according to Fig. 1.
Fig. 6 shows a signaling diagram illustrating a third example of a call setup process based on the communication connection establishment control scenario with UC prevention according to Fig. 1.
Fig. 7 shows a signaling diagram illustrating a fourth example of a call setup process based on the communication connection establishment control scenario with UC prevention according to Fig. 1.
Fig. 8 shows a diagram illustrating a communication connection establishment control scenario with UC prevention according to a further example of an embodiment of the invention.
Fig. 9 shows a diagram illustrating a management system for configuring a communication connection establishment control with UC prevention according to an additional example of an embodiment of the invention.
Fig. 10 shows a block circuit diagram of a network element comprising functions of the management system according to the additional example of an embodiment of the invention.
Fig. 11 shows a diagram illustrating a graphical user interface used in the management system according to Fig. 9.
Fig. 12 shows a flowchart describing a process flow of setting communication connection establishment control scheme with UC prevention according to the additional example of an embodiment of the invention.

### DESCRIPTION OF PREFERRED EMBODIMENTS

In the following, examples and embodiments of the present invention are described with reference to the drawings. For illustrating the present invention, the examples and embodiments will be described in connection with a communication system which may be based on a 3GPP system where a voice based communication connection or session to a communication connection terminating node like a UE is tried to be established by a potential spammer. However, it is to be noted that the present invention is not limited to an application in such a system or environment but is also applicable in other network systems, connection types and the like.

A basic system architecture of a communication network may comprise a commonly known architecture of a wired or wireless access network subsystem. Such an architecture comprises one or more access network control units, radio access network elements, access service network gateways or base transceiver stations, with which a user equipment is capable to communicate via one or more channels for transmitting several types of data. The general functions and interconnections of these elements are known to those skilled in the art and described in corresponding specifications so that a detailed description thereof is omitted herein. However, it is to be noted that there are provided several additional network elements and signaling links used for a communication connection or a call between user terminals and/or servers than those described in detail herein below.

Furthermore, the network elements and their functions described herein may be implemented by software, e.g. by a computer program product for a computer, or by hardware. In any case, for executing their respective functions, correspondingly used devices, such as an application server or network control element, like a voice application server or a P-CSCF (Proxy Call State Control Function), comprise several means and components (not shown) which are required for control, processing and communication/signaling functionality. Such means may comprise, for example, a processor unit for executing instructions, programs and for processing data, memory means for storing instructions, programs and data, for serving as a work area of the processor and the like (e.g. ROM, RAM, EEPROM, and the like), input means for inputting data and instructions by software (e.g. floppy diskette, CD-ROM, EEPROM, and the like), user interface means for providing monitor and manipulation possibilities to a user (e.g. a screen, a keyboard and the like), interface means for establishing links and/or connections under the control of the processor unit (e.g. wired and wireless interface means, an antenna, etc.) and the like.

According to one example of an embodiment of the invention, a communication connection establishment control comprising a SPIT/UC prevention is based on the use of services such as already existing supplementary services and suitable combinations thereof. The services may comprise, for example, SCR (also referred to as blacklisting or blacklist check), where it is determined whether an identification element or number of a calling party requesting a setup of a communication connection matches a stored identification of calling parties to be rejected. Another service may be SCA (also referred to as white listing or whitelist check), where it is determined whether the identification element of the requesting calling party matches a stored identification of calling parties allowed to be connected to the subscriber. Moreover, a corresponding service may comprise conditional call forwarding, e.g. based on a time of day or to another destination than that indicated in the request. Also other services or functions may be used, such as, for example, forwarding a request to the calling party for returning an authentication (like a character based authentication code or PIN) for allowing the establishment of the communication connection and checking the received authentication. This function, which is also referred to as PIN over-ruling of the whitelist, can be implemented either in form of a separate service portion or be combined with other services, in particular SCA or the like. Another service or function may be sending an announcement (like a speech message) to the calling party, the announcement may indicate information usable for deriving an authentication (like a character based authentication code or PIN) usable for getting allowance for the establishment of the communication connection. The authentication code or PIN on which this function or service is based may be checked in a similar manner as the authentication code or PIN related to the PIN over-ruling of the whitelist, i.e. it may be checked by the SCA service, for example, as another PIN over-ruling of the whitelist. Parameters used for the services may be set and/or configured in a communication connection establishment control profile for a subscriber. Resources to store and to execute the services for the UC or SPIT prevention may be provided by the communication network, such as a VoIP network or PSTN, while the configuration and the management of the UC prevention scheme (the communication connection establishment control profile) is performed by the user. It is to be noted that some of functions for the UC prevention, such as a CAPTCHA (Completely Automated Turing test to tell Computers and Humans Apart) module (described later) may be implemented in a user equipment.

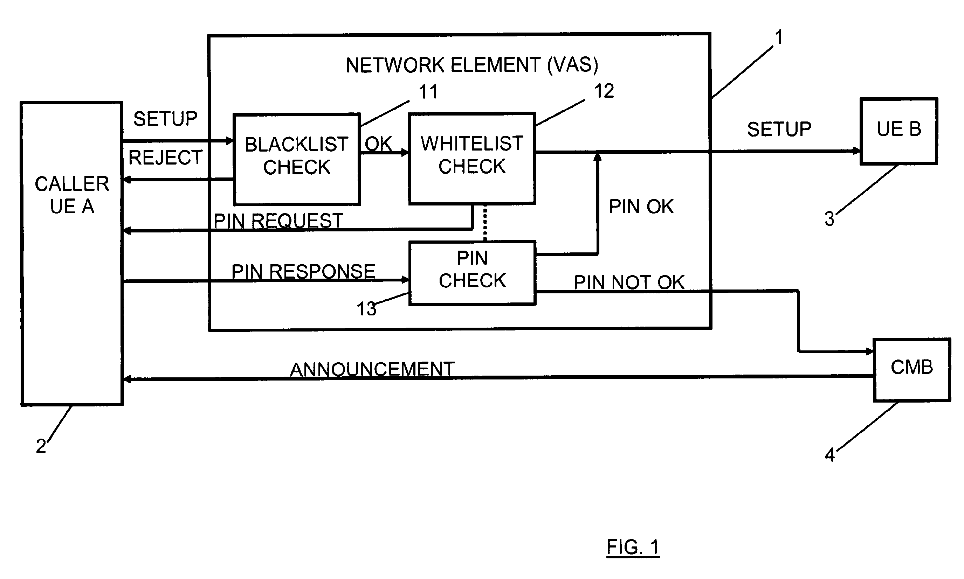

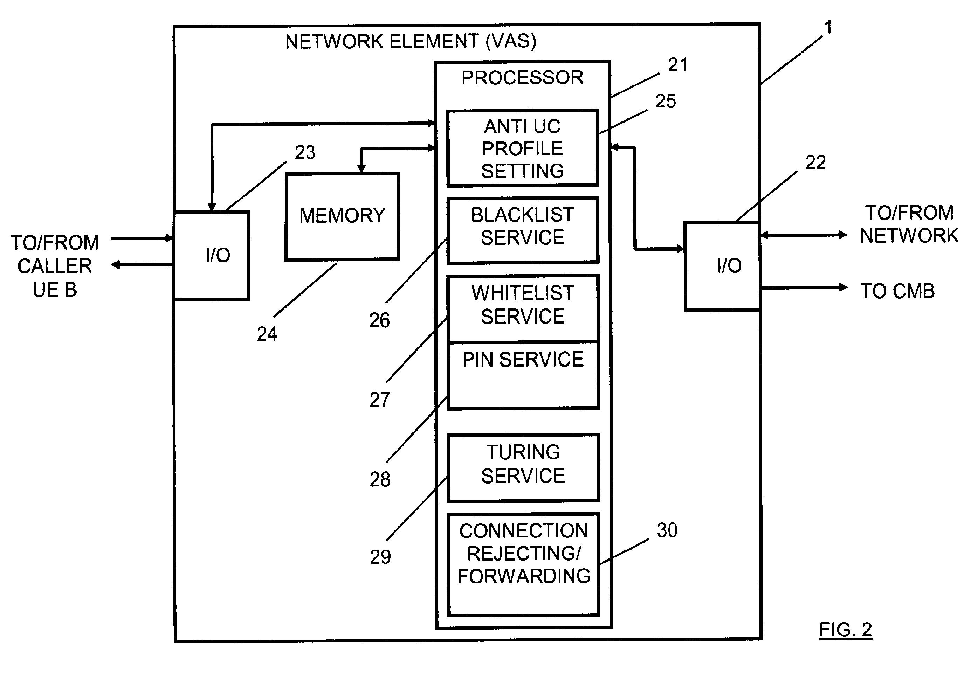

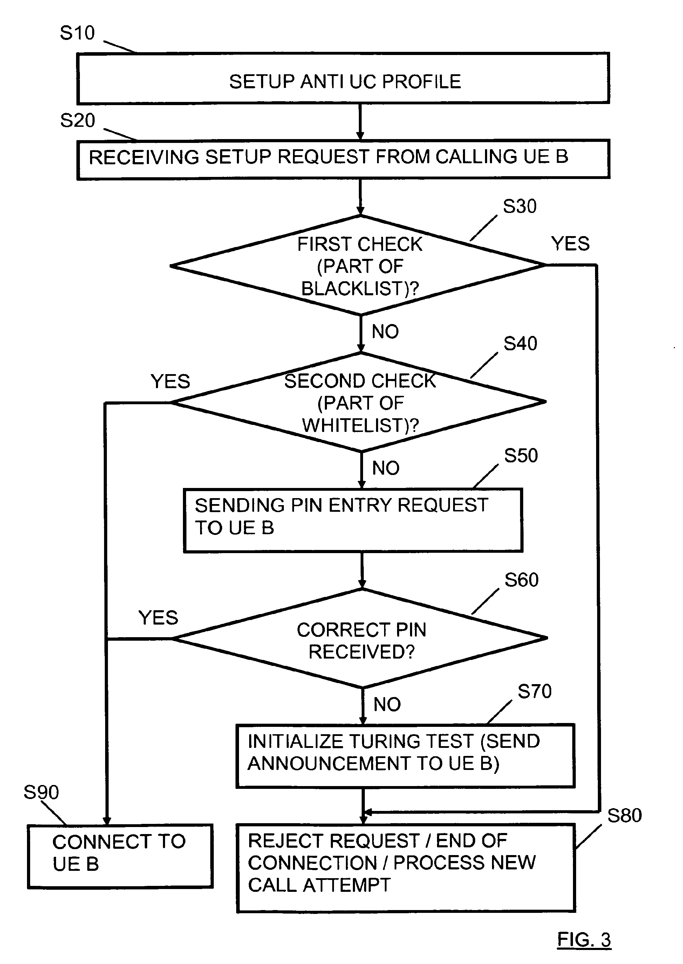

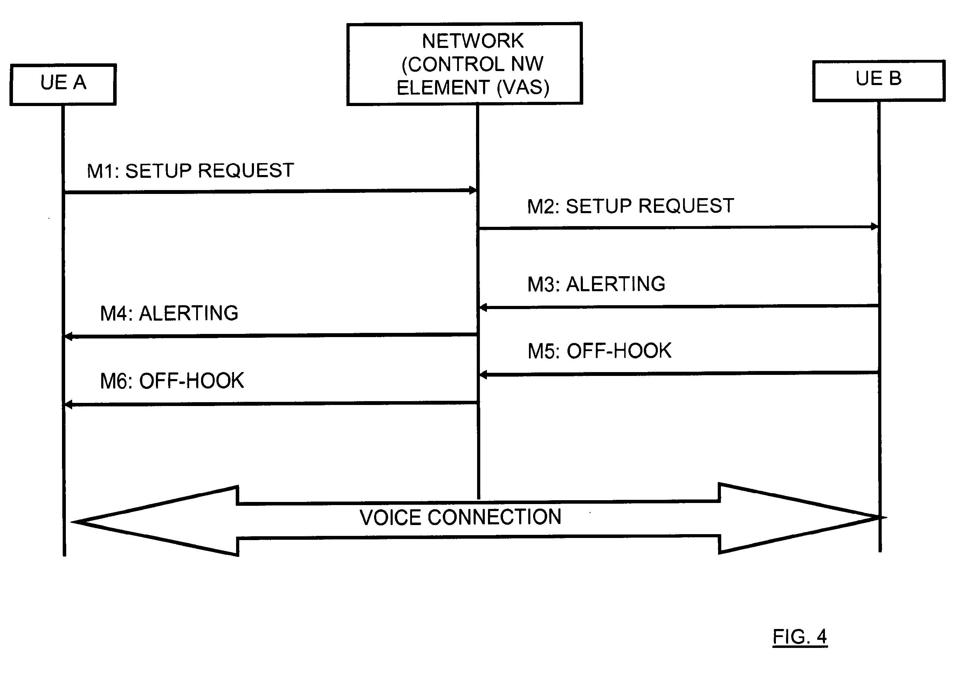

As a first example of an embodiment of the invention, reference is made to Figs. 1 to 7. Fig. 1 shows a diagram illustrating a communication connection establishment control scenario with UC prevention giving an overview of a UC prevention scheme that is realized by using supplementary services provided by the voice network and a function (here, an audio CAPTCHA) in the user equipment. Fig. 2 shows a block circuit diagram of a network element of Fig. 1 (the Voice Application Server or VAS) comprising functions of the communication connection establishment control. Fig. 3 shows a flowchart describing a process flow of the communication connection establishment control with UC prevention according to Fig. 1. Figs. 4 to 7 show signaling diagrams illustrating different situations, depending on the kind of the calling party, when a call setup process based on the communication connection establishment control scenario with UC prevention according to Fig. 1 is executed.

In Fig. 1, reference sign 2 denotes a caller (UE A) which is requesting a communication connection establishment and may be a potential UC sender or "SPITter". Reference sign 3 denotes a called subscriber of the network (UE B), i.e. the potential SPIT/UC victim. Reference sign 1 denotes a network element (or several network elements, depending on the corresponding network structure), like the VAS, where the communication connection establishment control with UC prevention is executed. In this network element 1, a combination of several functions based, for example, on the above mentioned services is executed in a predetermined order (i.e. with a priority for the respective services).

In detail, according to this example of an embodiment of the invention, the communication connection establishment control comprises a blacklist check function 11, a whitelist check function 12, and an authentication code (or Personal Identification Number/PIN) check function 13 (the whitelist check function 12 and the authentication code check function 13 may be implemented by a same function set which is indicated by a dashed line). These functions may be located centralized in one network element, like the VAS 1, or may be arranged in a distributed manner in several different network elements with the VAS 1 as a linking and controlling network node.

Furthermore, a consent mailbox (CMB) 4 is provided as a device useable to send an announcement to the calling UE A (described later) which may be part of the UE B or provided by another network element or be part of the VAS 1. The announcement may be a voice message or another type of message, such as a Short Message Service (SMS) signaling or the like.

By means of the above described services and functions, the present example of an UC prevention or communication connection establishment control according to an embodiment of the invention is composed of a black list check, a white list check, elements of a grey list, a consent-based communication and Turing tests. It is to be noted that the order of corresponding services may be different to that of Fig. 1 in other examples, for example, by conducting first a whitelist check, or the like.

In the following, the structure and function of a network element used in the communication connection establishment control scheme as illustrated in Fig. 1 and corresponding to the VAS 1 is described in connection with Fig. 2.

In Fig. 2, a block circuit diagram of a network element like an application server implementing an UC prevention, for example the VAS 1 of Fig. 1, according to an example of an embodiment of the invention is shown. It is to be noted that the network element may comprise several further elements or functions besides those described in connection with Fig. 2 which are omitted herein for the sake of simplicity as they are not essential for understanding the invention.

The network element 1 for performing the UC prevention (referred to as VAS hereinafter) according to Fig. 2 comprises a processing function or processor 21, such as a CPU or the like, which executes instructions given by programs or the like related to the processing shown in Fig. 3 (described later). The processor 21 is in particular used for setting and executing the UC prevention scheme. Reference signs 22 and 23 denote input/output (I/O) units connected to the processor 21. The I/O unit 22 may be used for communicating with the network (for example, network elements providing services used for the UC prevention, such as SCR, SCA etc.), and to the CMB 4 for initiating the transmission of the announcement. The I/O unit 23 may be used for communicating with the UE B (or an intermediate proxy leading to the UE B). The I/O units 22 and 23 may also be combined in one member, such as a transceiver unit or the like, or may comprise a distributed structure with a plurality of different interfaces. Reference sign 24 denotes a memory usable, for example, for storing data and programs to be executed by the processor 21 and/or as a working storage of the processor 21.

Reference signs 25 to 30 denote portions or functions comprised in the processor 21. It is to be noted that these portions 25 to 30 may represent either function blocks which provide the respective function by itself (e.g. in form of a program executed by the processor 21) or communication portions providing a link to another (external) server or the like which provides the respective function. Reference sign 25 denotes an anti UC profile setting portion by means of which the communication connection establishment control profile of the subscriber is setup. Reference sign 26 denotes a blacklist service portion (like SCR) which provides a blacklist check. Reference sign 27 denotes a whitelist service (like SCA) portion which provides a whitelist check. Reference sign 28 denotes a PIN service portion as an authentication check which provides a PIN request and determines whether the correct PIN is received, for example. The PIN service portion 28 may be a separate function or part of the whitelist (SCA) service portion 27. Reference sign 29 denotes a Turing service portion which provides a Turing test (for example, CAPTCHA) via the CMB 4, for example. It is to be noted that an authentication code or PIN which may be indicated by the Turing test is checked in a similar manner as the (first) authentication code, i.e. by the PIN service portion 28. Reference sign 30 denotes a connection rejecting/forwarding portion which rejects or forwards the communication connection, depending on the results achieved by the services used for UC prevention.

Next, the process flow of the communication connection establishment control or UC prevention according to the example of an embodiment of the invention is described with reference to Figs. 1 and 3. Fig. 3 shows a flow chart of a method executed by an apparatus comprising the elements and functions of the VAS 1 and the CMB 4 according to Fig. 1 for executing the communication connection establishment control according to the example of an embodiment of the invention.

As a first step, in S10, an anti UC profile for the communication connection establishment control is setup. For example, settings and parameters provided by a subscriber for a communication connection establishment control scheme with UC prevention in a communication connection establishment control profile are implemented in the network element 1. Based on this profile, the services used for the UC prevention are set, as described below.

Next, in step S20, a caller (UE A) is trying to establish a communication connection like a voice call towards the subscriber (UE B) wherein a corresponding setup request (e.g. SIP INVITE or the like) is received at the VAS 1. Due to the set anti UC profile, UC prevention processing as described below is executed.

In step S30, for example in the blacklist check function block 11, a first check using a service (supplementary service) like 'Selective Call Rejection' (SCR) is executed. In this service, identification elements or numbers provided by the setup messaging for identifying the UE A are checked by using a black list (BL) that rejects all matching numbers, for example by means of a denial announcement or the like to the UE A. This functionality is used to ward off known 'SPITters' directly when they try to get access to subscriber B. Thus, if the first check is positive (i.e. there is a matching entry in the BL), then step S80 is executed where the setup request is rejected.

Otherwise, if no matching entry is found, step S40 is executed where a second check using another service like "Selective Call Acceptance" (SCA) is executed. In this service the identification elements or numbers provided by the setup messaging for identifying the UE A are checked by using a white list (WL), for example in the whitelist check function block 12. Callers matching an entry on the WL may be directly put through to the subscriber UE B 3 (step S90 in case the determination in step S40 is positive). It is to be noted that, while it is not so difficult to circumvent a BL, e.g. by address spoofing, it is more difficult to guess the entries of a WL.

However, there may be a problem with WL check that no other callers than those matching the White List are able to reach the subscriber B. Consequently, not only 'SPITters', but also legitimate callers may be excluded when using this whitelist check. Thus, in order to solve a problem which could be summarized as "how do I get on the White List?", also referred to as introduction problem, the communication connection establishment control according to the present example of an embodiment of the invention further comprises a consent-based communication.

Accordingly, in case the determination in step S40 is negative, i.e. no matching WL entry is present for the identification of the caller, a service referred to as "Selective Call Acceptance" or the like is executed in step S50. Here, an authentication request is sent to the UE A indicating to the user of the UE A that an authentication code, like a PIN or the like, has to be returned before allowing the call to subscriber B. The PIN or the like allows overriding the WL. In other words, a user not matching the WL is asked by an announcement to enter a valid PIN. Then in step S60, it is checked whether a correct PIN or the like is received. This may be effected by the same function which checks whether a matching WL entry is present (like SCA). This checking may comprise, for example, a detection whether a (correct) PIN is returned within a predetermined time and whether the returned authentication code (PIN) corresponds to a stored master code (Master PIN) or the like, and may be executed by the function block 13 (or 12 if function block 13's function is part thereof, as indicated above).

When the determination in step S60 is positive, i.e. the correct PIN is received within a predetermined time period, the caller (UE A) is put through to the subscriber B (step S90).

Otherwise, in case the determination in step S60 is negative, step S70 is executed. Here, a Turing test, such as a CAPTCHA test, is initialized. For this purpose, the caller may be forwarded to the Consent Mailbox (CMB) 4. The CMB 4 can be either at user's site or it can be a network-based mailbox. The CMB performs now the Turing test where an announcement, like a speech message generated by the network or the subscriber, is sent to the UE A. This is in particular useful for preventing the subscriber B from being called by SPIT/UC automata, e.g. PCs or the like. For the Turing test, the CMB sends a message indicating, for example, a question or the like for asking the caller a riddle where the solution of the riddle is an authentication code allowing the forwarding to subscriber B, for example, by means of the function block 13. The authentication code retrievable by the announcement may be different from the (first) authentication code asked in step S50, or may be the same code. Usually, the information provided by the announcement is only useful by a human so that the question leading to the (second) authentication code can not be solved by machines or the like being part of a SPIT/UC automata. As every subscriber is able to create his personal announcement, it is difficult to circumvent this Turing test, as the question has really to be understood and solved. If a human caller is able to solve the Turing test, he now possesses a correct PIN or the like and is able to call subscriber B again wherein the call can be established then in step S60, i.e. after entering a correct PIN. Since this second call causes additional cost plus additional time, this part of the UC prevention scheme is thus comparable to a grey list whose functionality is based on human behavior. Furthermore, since this procedure may lead to additional costs and time consumption, a human 'SPITter' with commercial interest is usually not willing to contact the subscriber B again.

It is to be noted that the Turing test in step S70 and correspondingly the processing of the CMB 4 may comprise a further function in which the caller is given the possibility to leave a message for the subscriber B, e.g. the request to call him back, which can be retrieved by subscriber B. Also identification information of the UE A may be stored for later processing by the subscriber (e.g. entry in one of the BL and WL, or for a call-back function). The message and/or information may be stored in the CMB 4 or in another storage, depending on settings of the network operator and/or the subscriber (for example, an additional call forwarding to a personal mailbox of the UE B or the like may be set).

After the Turing test in step S70, i.e. the sending of the announcement to the UE A, the connection is ended, i.e. the setup request of UE A is rejected in step S80 wherein a new call attempt, e.g. based on the retrieved (second) authentication code, can then be made by the caller UE A and correspondingly processed in the network.

It is to be noted that in case of a human 'SPITter' who has overcome all hurdles of the communication connection establishment control and nevertheless reaches subscriber B, this caller can be easily put on the BL (if not calling anonymously), so that he is blocked at the next call attempt.

Next, for illustrating the effects of an implementation of the communication connection establishment control according to the example of an embodiment as described above, in Figs. 4 to 7 different scenarios are explained by using schematic message sequences in a simplified network structure. It is to be noted that these signalling diagrams are not complete for any existing communication protocol (for example, connection release, timeouts or cancelled connections are excluded for simplicity). The diagrams are only for indicating the basic differences between the different scenarios.

Fig. 4 shows a case where a call setup between the UE A 2 and the UE B 3 is executed without a UC prevention scheme being implemented.

In step M1, an initial setup message (e.g. IAM or SIP INVITE) is sent to the network (e.g. the network element 1) and forwarded to the UE B so as to alert the subscriber (step M2) and let the UE B ringing or the like. Corresponding return messages (steps M3 and M4) are returned to the UE A (e.g. ACM or SIP 180 ringing message). When the subscribed (UE B) answers the call (off-hook), this is again signaled towards UE A in steps M5 and M6 (e.g. ANM or SIP 200 OK message). Thus, the media connection is established between UE A and UE B.

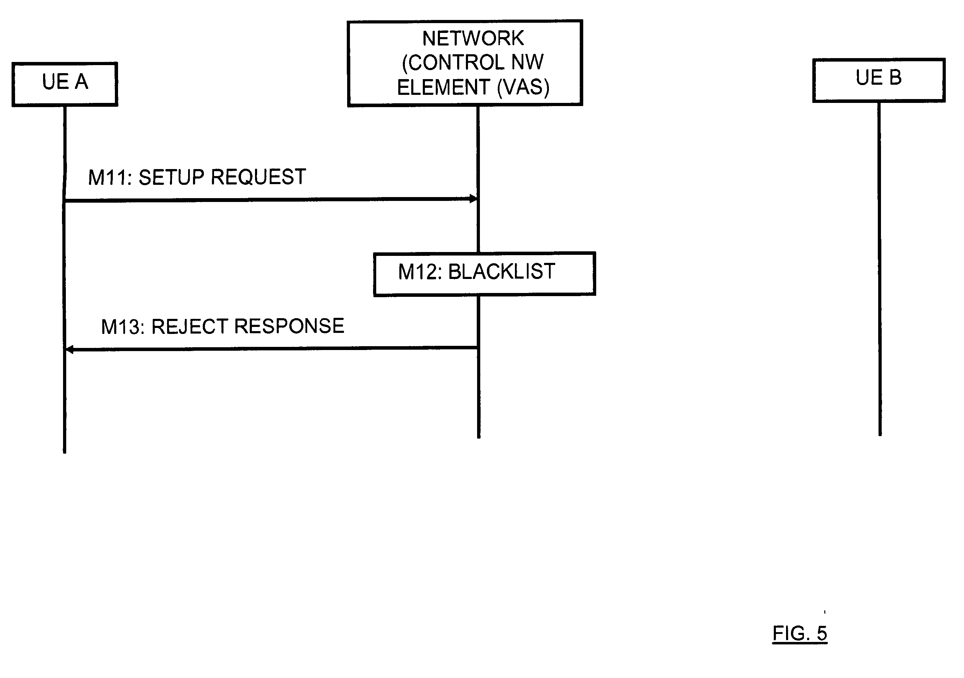

Fig. 5 shows a case where a call setup between the UE A 2 and the UE B 3 is executed with the UC prevention scheme being implemented. In the scenario of Fig. 5, it is assumed that the identification element indicating the UE A, like the UE A's address information, is contained in the list of known 'SPITters' (blacklist for SCR). Thus, after the initial setup message (e.g. IAM or SIP INVITE) is sent to the network (e.g. the network element 1) in step M11, the network performs the communication connection establishment control with the blacklist check in step M12 and determines that the call is to be rejected. Hence, in step M13, the setup request is rejected so as to block the call by the network while the UE B is not alerted.

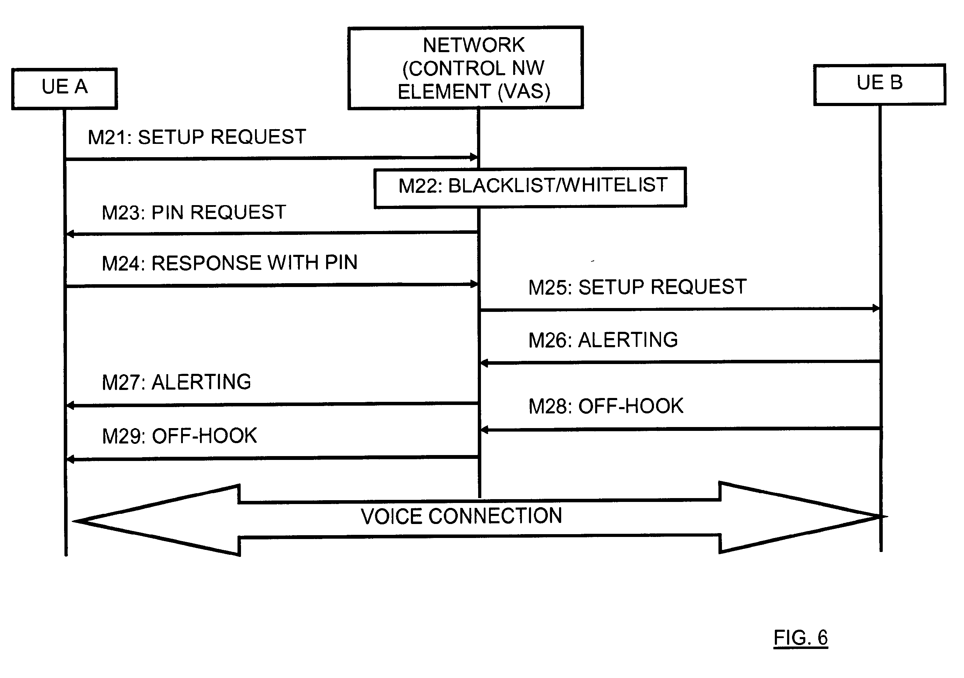

Fig. 6 shows also a case where a call setup between the UE A 2 and the UE B 3 is executed with the UC prevention scheme being implemented. In the scenario of Fig. 6, it is assumed that the identification element indicating the UE A, like the UE A's address information, is neither contained in the list of known 'SPITters' (blacklist for SCR) nor part of the whitelist (SCA), but that the UE A knows the (first) authentication code or PIN. Thus, after the initial setup message (e.g. IAM or SIP INVITE) is sent to the network (e.g. the network element 1) in step M21, the network performs the communication connection establishment control with the blacklist check and the whitelist check in step M22 and determines that there is not matching entry in the respective list. Hence, after being rejected by the SCA white list (i.e. the call is not forwarded to the UE B directly), UE A may enter a PIN or the like. For this purpose, in step M23, a request for an authentication code is sent back to the UE B. In step M24, the correct authentication code is returned from the UE A which is acknowledged by the network (e.g. network element 1). Therefore, like in Fig. 4, the setup is forwarded to the UE B so as to alert the subscriber (step M25) and let the UE B ringing or the like. Corresponding return messages (steps M26 and M27) are returned to the UE A. When the subscribed (UE B) answers the call (off-hook), this is again signaled towards UE A in steps M28 and M29. Thus, the media connection is established between UE A and UE B.

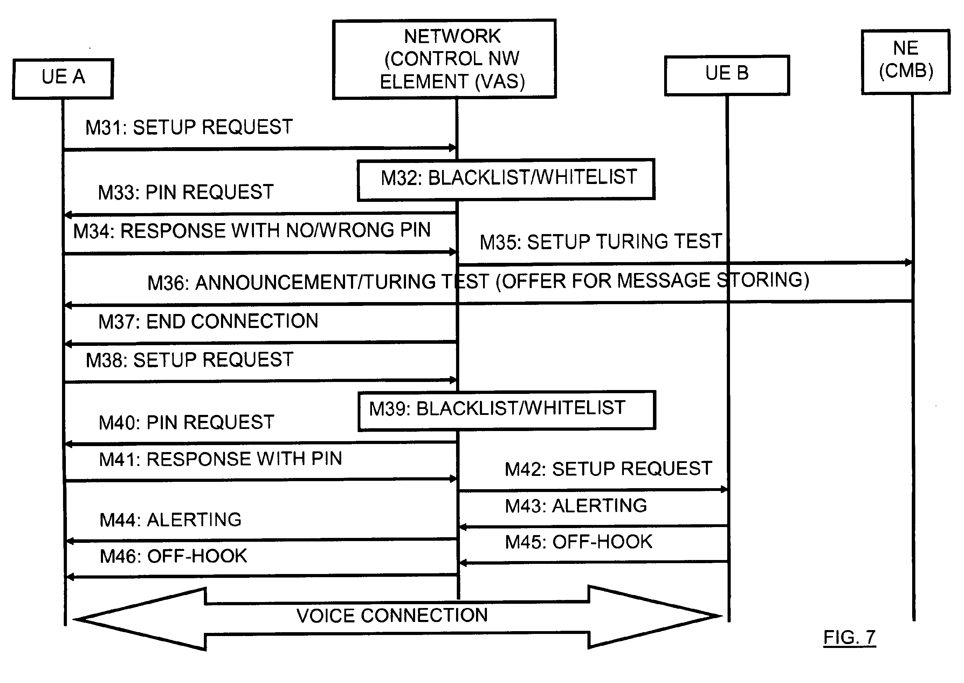

Fig. 7 shows also a case where a call setup between the UE A 2 and the UE B 3 is executed with the UC prevention scheme being implemented. In the scenario of Fig. 7, it is assumed that the identification element indicating the UE A, like the UE A's address information, is neither contained in the list of known 'SPITters' (blacklist for SCR) nor part of the whitelist (SCA), and that the UE A does not know the (first) authentication code or PIN. Instead, the UE A' user is receiving a hint by an announcement, e.g. from a CAPTCHA module, and can reach establishment of the call to subscriber B in a second call attempt. In detail, after the initial setup message is sent to the network (e.g. the network element 1) in step M31, the network performs the communication connection establishment control with the blacklist check and the whitelist check in step M32 and determines that there is not matching entry in the respective list. Hence, after being rejected by the SCA white list, in step M33, a request for an authentication code is sent back to the UE B. In step M34, no correct authentication code is returned (in time) from the UE A. When this situation is determined by the network (network element 1), a further check in the form of a Turing test or the like is initiated by the network. Hence, in step M35, the call is forwarded to the CMB (or an audio CAPTCHA device) on a further connection line, e.g. a like assigned to the subscriber B (URI B2) so as to initialize the Turing test. At the CMB, the user of UE A may get a possibility to leave a message and/or to listen to an announcement (step M36) that will help the user of UE A to find out a (second) authentication code or PIN for a subsequent call attempt. After sending the announcement (or storing the message from the UE A's user, the communication connection to the UE A is ended in step M37. With the (second) authentication code, a second call attempt can be made by the UE A (steps M38 to M46) leading to a media connection between UE A and UE B, wherein in step M41 the authentication code derived from the message in step M36 is entered by UE A. Steps M38 to M46 correspond to steps MM21 to M29 of Fig. 6 so that a description thereof is not repeated herein.

It is to be noted that in case of using the audio CAPTCHA /PIN scheme to solve the white list introduction problem in a more general fashion, a question like asking the birthday may not be suitable. Instead, a puzzle solvable by the intended audience may be chosen (e.g. "the PIN is nine thousand minus one hundred twenty-three").

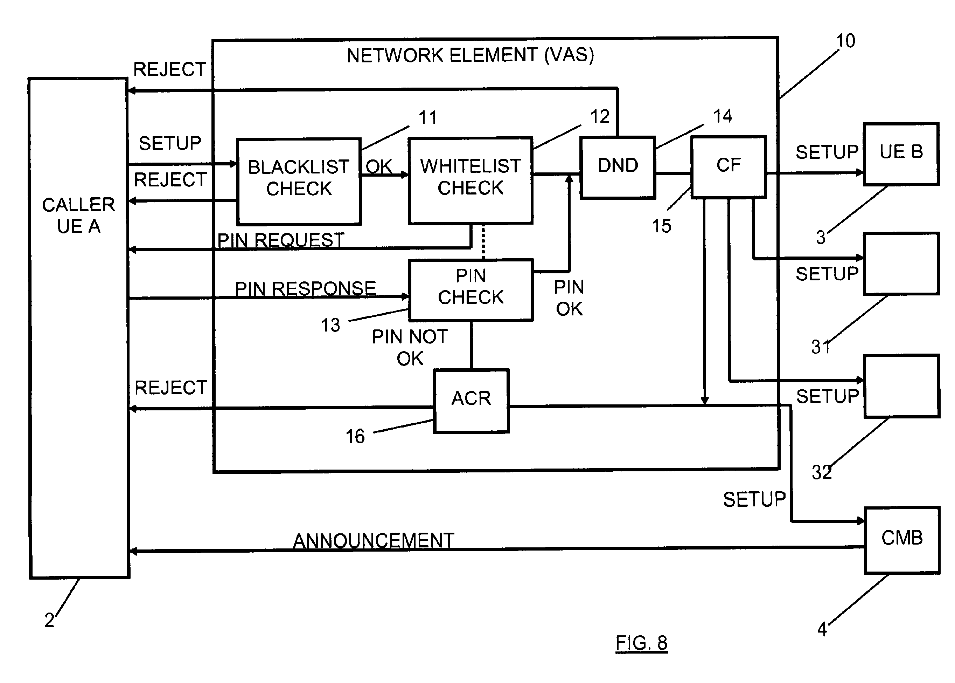

With reference to Fig. 8, a further example of an embodiment of the invention is described. Fig. 8 shows a diagram illustrating a further communication connection establishment control scenario with UC prevention giving an overview of a UC prevention scheme that is realized by using supplementary services provided by the voice network and a function (here, an audio CAPTCHA) in the user equipment.

The communication connection establishment control scenario with UC prevention according to Fig. 8 is based on the communication connection establishment control scenario with UC prevention according to Fig. 1. Thus, elements having the same functions are provided with the same reference signs. Hence, in Fig. 1, reference sign 2 denotes the caller (UE A) which is requesting a communication connection establishment and may be a potential UC sender or "SPITter". Reference sign 3 denotes the called subscriber of the network (UE B). Reference sign 10 denotes a network element (or several network elements, depending on the corresponding network structure), like a VAS, where the communication connection establishment control with UC prevention according to this example is executed. In this network element 1, a combination of several functions based on several services is executed in a predetermined order (i.e. with a priority for the respective services).

In detail, according to this example of an embodiment of the invention, the communication connection establishment control comprises a blacklist check function 11, a whitelist check function 12, and an authentication code (or Personal Identification Number/PIN) check function 13. As in the example of an embodiment of the invention shown in Fig. 1, the whitelist check function 12 and the authentication code check function 13 may be implemented by a same function set which is indicated by a dashed line, i.e. the function, which is also referred to as PIN over-ruling of the whitelist, can be implemented either in form of a separate service portion or be combined with other services, in particular SCA or the like. These and further functions (like functions 14 to 16 described below) may be located centralized in one network element, like the VAS 1, or may be arranged in a distributed manner in several different network elements with the VAS 1 as a linking and controlling network node. The portions 11 to 13 may operate in basically the same manner like the portions 11 to 13 of Fig. 1, i.e. according to steps S30 to S70 of Fig. 3, for example.

Also a consent mailbox (CMB) 4 is provided as a device useable to send an announcement to the calling UE A (described later) which may be part of the UE B or provided by another network element or be part of the VAS 10. The announcement may be a voice message or another type of message, such as a Short Message Service (SMS) signaling or the like.

In addition to the portions 11 to 13, the communication connection establishment control scenario with UC prevention in the network element 10 comprises also additional functions. These functions can be set optionally and combined with the other services in selected priority orders. The function include, for example, a service for checking whether an instruction to block external communication connection establishment attempts is present, and if the instruction is present, rejecting the request for the establishment of the communication connection, such as a DND (Do Not Disturb) function 14. Another function may include, for example, a service checking whether a specific communication connection forwarding instruction is present, and, when the specific communication connection forwarding instruction (like a permission to establish a communication connection to the subscriber only at predetermined periods of time, an instruction to setup the communication connection to another destination, an instruction to setup the communication connection to another destination only at predetermined periods of time, and/or an instruction to send the announcement (of the CMB) in case the result of the determining of whether the identification element of the requesting calling party matches a stored identification of calling parties allowed to be connected to the subscriber is positive is present), and handling the request for the establishment of the communication connection in accordance with the specific communication connection forwarding instruction, such as a CF (Call Forwarding or in particular a Call Forwarding based on time of day) function 15. Moreover, another function may include a service detecting whether the calling party provides identification information usable for identifying the calling party, and, when the identification information is not detected, rejecting the request for the establishment of the communication connection, such as an ACR (Anonymous Call Rejection) function 16. It is to be noted that as a further alternative an EACR (enhanced anonymous call rejection) service may be implemented as a corresponding function. In this EACR function (not shown in Fig. 8) the caller is allowed to decide between giving up their privacy (i.e. identifying themselves by sending a usable identification element or the like), entering a PIN or speaking their name when calling a callee with EACR enabled. An EACR function may be implemented in a system as shown in Fig. 8 in a similar way as the ACR function 16.

Anonymous Call Rejection (ACR) can be enabled if subscriber B generally wants to exclude anonymous callers. This can be an effective measure as commercial 'SPITters' often use the anonymity feature whether allowed by legislation or not. Do Not Disturb (DND) allows to occasionally block all external callers if subscriber B does not want to be interrupted. Call Forwarding or Call Forwarding Time-of-Day (CFToD) is service that provides Black- and White Lists (can be selected by user) that can be additionally combined with time tables. This service can be used to further restrict the whitelist (based on SCA) in a time dependent way, e.g. so as to further restrict the whitelist during night time, for example, to forward calls to another destination address (such as another terminal like a mobile phone 31, or to an office terminal 32 during specific times, or to the CMB 4).

The processing and structure of the communication connection establishment control scenario with UC prevention according to the example shown in Fig. 8 are similar to those the example described in connection with Figs. 1 to 3, regarding the functions 11 to 13.

However, different to the example according to Figs. 1 to 3, in the communication connection establishment control scenario with UC prevention according to Fig. 8, when the whitelist check results in a matching entry in block 12 or a correct (first) authentication is detected to be returned from the UE A in block 13, the call may not directly be forwarded to the subscriber but processed by the services in accordance with functions 14 and 15. In other words, it is checked, whether a general call blocking is set by the DND function block 14. If such an instruction is present, rejection of the call is performed and signaled to the UE A 2. Otherwise, if no call blocking is set, a call forwarding instruction is checked in function block 15. That is, depending on a setting for the call forwarding (e.g. considering the time of day of the call), the call is forwarded either to the subscriber (UE B 3) or to another destination like a mobile phone 31 or an office number 32 of the subscriber. In addition, it is also possible that the call is forwarded to a mailbox or the like, like the CMB 4, where the caller may store a message or the like or receive an announcement.

Also in case the authentication check function in block 13 leads to a result that the PIN or the like is not correctly received, the processing of the communication connection establishment control scenario with UC prevention in the present example may differ by providing the function block 16 where it is checked whether the caller has sent a (usable) identification element at all, i.e. whether the call is made anonymous or not. If it is an anonymous call, it can be set in the function block 16 to reject the call and to end the connection which is indicated to the UE A 2. Alternatively, if an EACR service is used instead, the caller at UE A 2 is allowed to give up privacy (i.e. identifying himself by sending a usable identification element or the like), to enter a PIN or to speak his name. Corresponding inputs may be processed by the function block (not shown) providing EACR (corresponding to ACR block 16). Otherwise, in case an identification element as such is detected, the call can be processed further by starting the Turing test and setting up the CMB 4 correspondingly.

It is to be noted that the order of services as indicated in Fig. 8 may be different in other examples. For example, the ACR check in function block 16 may be located at a higher priority level, for example as the first check to be made. Furthermore, as indicated above, the setting of the communication connection establishment control profile may be such that one or more of these services are activated/deactivated.

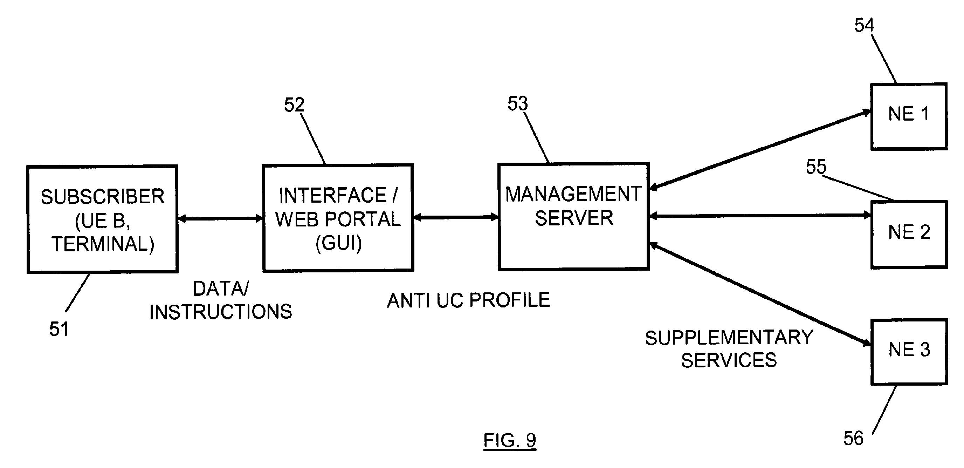

Next, a management system according to a further example of an embodiment of the invention for configuring and setting a communication connection establishment control scheme and profile for UC prevention is described with reference to Figs. 9 to 12.

The management system according to the further example of an embodiment of the invention provides measures for generating and setting a communication connection establishment profile for a subscriber. For this purpose, for example, the operator of the network may generate or establish a preliminary communication connection establishment control scheme by defining and combining one or more services specified for the communication connection establishment control with UC prevention, such as the services described in connection with Figs. 1 and 8. When the preliminary communication connection establishment control scheme is established, an interface for a subscriber, such as a graphical user interface (GUI) is provided comprising means for inputting instructions and/or data for generating a communication connection establishment control profile for the subscriber, wherein the subscriber uses the preliminary communication connection establishment control scheme as a template for tailoring his own profile.

The selected services may be provided by the operator in a specific order for execution, i.e. with a priority of processing. This order may be also set or changed by the subscriber when configuring the communication connection establishment control profile.

Basically, instructions and/or data input in the interface by the subscriber are processed by the management system so as to determine in which way the subscriber has configured his communication connection establishment control profile. On this basis, a final communication connection establishment control scheme is set which is used for processing a request for establishing a communication connection to the subscriber.

In the management system indicated in Fig. 9, reference sign 51 denotes a terminal (like a PC or the like) or the UE B of the subscribed by means of which the interface is displayed or the like to the user and instructions and/or data for the communication connection establishment control profile are entered. Reference sign 52 denotes the interface like the GUI provided by means of a web portal, like an Internet page based on HTML (Hyper Text Markup Language or the like) which is accessible by the subscriber 51. Reference sign 53 denotes a management server which is connected or linked to the interface 52. The management server provides the preliminary communication connection establishment control scheme, templates and data for generating the GUI, and retrieves the anti UC profile (the communication connection establishment control profile of the subscriber) based on the input instructions/data for configuring the final communication connection establishment control scheme. The management server is also connected to plural network elements 54, 55, 56 which may provide the services used in the communication connection establishment control. The management server may be part of the network element 1 or 10 according to Figs. 1 and 8, or connected thereto as an external element.

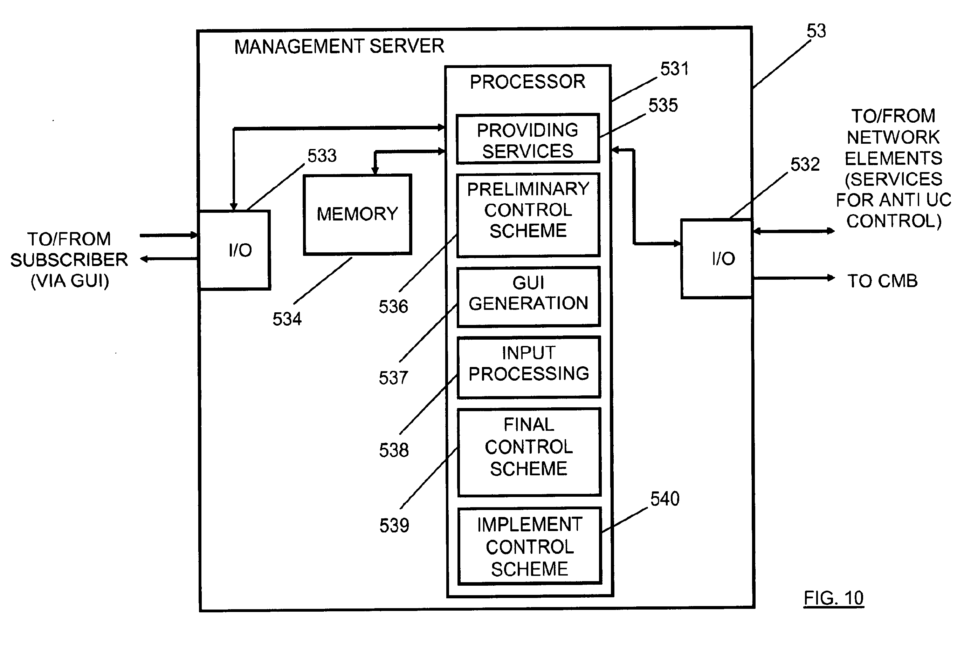

According to the management system shown in Fig. 9, services such as supplementary service for UC prevention are selected combined in a specific order of priority for providing a comprehensive SPIT/UC prevention scenario.
In particular, the management system is used for the configuration and the management of the services by the user in the form of a coordinated SPIT/UC prevention scenario, and for offering the operator to prepare or establish preliminary communication connection establishment control schemes as a kind of template for the user setting. The setting of the subscriber may be done either by means of DTMF (Dual Tone Multi Frequency) setting or preferably by a Web interface provided by the operator. Moreover, additional means, such as an additional software layer, may be provided that gives the user the feeling to configure an interrelated and complete SPIT/UC prevention scenario, for example, wherein the management system is preferably also able to check whether the entries of the subscriber, such as entries into different lists (described later) are consistent, and whether the combination of services selected for the UC prevention is consistent. Next, the structure and function of the management server 53 used in the management system for the communication connection establishment control as illustrated in Fig. 9 is described in connection with Fig. 10.

In Fig. 10, a block circuit diagram of a network element 53 like a server implementing a management for an UC prevention, according to the further example of an embodiment of the invention is shown. It is to be noted that the network element 53 may comprise several further elements or functions besides those described in connection with Fig. 10 which are omitted herein for the sake of simplicity as they are not essential for understanding the invention.

The management server 53 according to Fig. 10 comprises a processing function or processor 531, such as a CPU or the like, which executes instructions given by programs or the like related to the management of the communication connection establishment control described above. The processor 531 is in particular used for generating, setting and configuring the preliminary and final communication connection establishment control schemes and for processing the communication connection establishment control profile configured by the subscriber 51. Reference signs 532 and 533 denote input/output (I/O) units connected to the processor 531. The I/O unit 533 may be used for communicating with the subscriber, i.e. the web portal for the GUI 52. The I/O unit 532 may be used for communicating with the network elements 54 to 56 providing different services for the UC prevention, such as SCR, SCA etc. The I/O units 532 and 533 may also be combined in one member, such as a transceiver unit or the like, or may comprise a distributed structure with a plurality of different units. Reference sign 534 denotes a memory usable, for example, for storing data and programs to be executed by the processor 531 and/or as a working storage of the processor 531.

Reference signs 535 to 540 denote portions or functions comprised in the processor 531. It is to be noted that these portions 535 to 540 may represent either function blocks which provide the respective function by itself (e.g. in form of a program executed by the processor 21) or communication portions providing a link to another (external) server or the like which provides the respective function. Reference sign 535 denotes service providing portion by means of which services to be used for the UC prevention can be designated and corresponding data necessary for setting the service can be retrieved. Reference sign 536 denotes a preliminary control scheme portion by means of which the (selected) services can be arranged in a preliminary communication connection establishment control scheme on which basis the further configuration of the UC prevention is executed. Reference sign 537 denotes a GUI generation portion by means of which the GUI for the subscriber's input can be generated on the basis of the preliminary communication connection establishment control scheme. Reference sign 538 denotes an input processing portion which processes the input instructions and/or data from the GUI, i.e. the communication connection establishment control profile, for the generation of the communication connection establishment control scheme. Reference sign 539 denotes a final control portion for establishing the final communication connection establishment control scheme. Reference sign 540 denotes an implementation control scheme for implementing the final communication connection establishment control scheme in a communication connection establishment control.

Assuming a case where the communication connection establishment control scheme has a structure corresponding to Fig. 8. Then, the management system generates a preliminary communication connection establishment control scheme comprising the functions indicated by blocks 11 to 16 of Fig. 8. Based on the architecture of Fig. 10, the subscriber 51 gets the information about the communication connection establishment control scheme by means of the GUI in the web portal 52 and configures the communication connection establishment control profile. This communication connection establishment control profile is then converted by the management server 53 into the final communication connection establishment control scheme wherein the services to be used for the UC prevention are set in accordance with the input instructions/data.

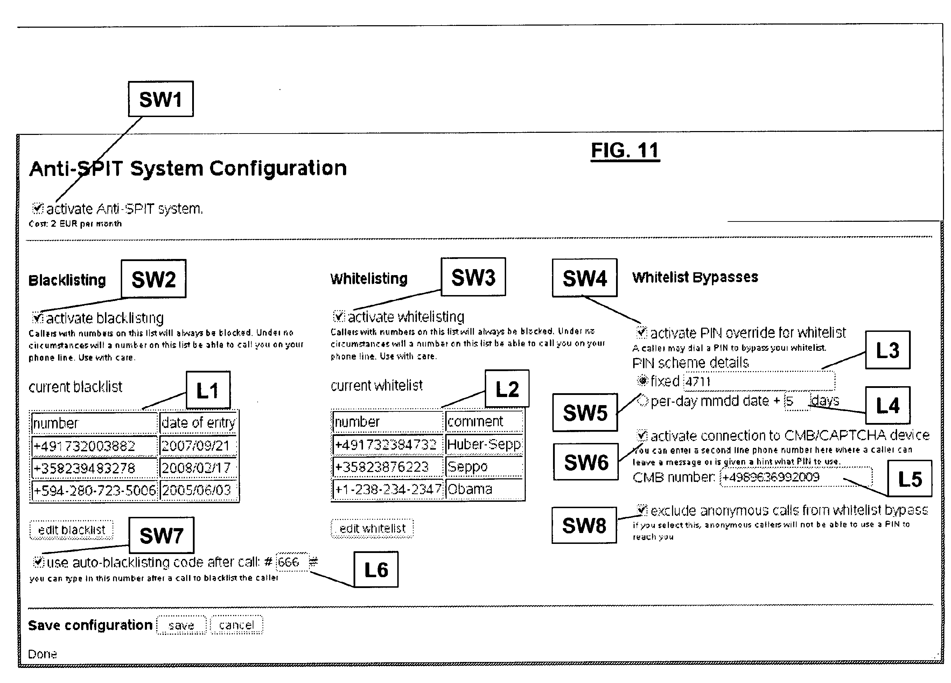

In Fig. 11, an example of the GUI according to an example of an embodiment of the invention is illustrated which is based on the communication connection establishment control scheme according to Fig. 8. The GUI represents a template for the preliminary communication connection establishment control scheme established by the operator. In the example according to Fig. 11, the services used for the UC prevention are arranged side by side on one layer or sheet. Alternatively, the services may be arranged on respective separate layers or sheets ordered one after the other, for example according to the priority of the respective service in the communication connection establishment control scheme.

In detail, the GUI comprises means for inputting instructions and/or data for assigning, for example, activation commands and parameters for parts of the communication connection establishment control profile. In the example of Fig. 11, there is provided, for example, activation means SW1 for activating/deactivating the whole anti-UC feature (on/off).

In addition, there are provided an activation means SW2 and data input means L1 for a blacklist service comprising a selection to use blacklisting (on/off), and a list for specifying identifications of callers to be used as a part of the blacklist. Furthermore, an activation means SW7 is provided which activates/deactivates a service allowing a later entry of numbers in the list L1 on the basis of identification elements received from calling users when entering a specific blacklist entry code L6 (to be entered prior to accepting the call / during the call / after terminating a call).

Furthermore, there are provided an activation means SW3 and data input means L2 for a whitelist service comprising a selection to use whitelisting (on/off), and a list for specifying identifications of callers to be used as a part of the whitelist. Moreover, there may be provided a service allowing an automatic entry of dialed numbers into whitelist wherein a corresponding activation means (on/off) may be also part of the GUI.

In addition, there is provided a set of services used as a whitelist bypass.

For using these services, there are provided activation means SW4 for activating/deactivating a PIN service for using an authentication code or PIN (on/off), and input means for selecting (SW5) a sort of PIN and for configuring (L3, L4) the PIN (for example, a fixed number L3 to be used as the PIN, or a specification of an algorithm or the like for dynamically setting an authentication, e.g. in the form of a date in mmdd (month-day) format + a predetermined number L4 (here 5)). As an alternative to the subscriber setting, a PIN or the like may be also preset by the network operator and communicated to the subscriber.

Moreover, there are provided activation means SW6 for activating/deactivating a Turing test service using a CMB and CAPTCHA device (on/off), and input means L5 for specifying a destination address where the call is to be forwarded, i.e. the address of the CMB, for example. The entry in L5 may also be auto-configured by the network operator.

Furthermore, there are provided activation means SW8 for activating/deactivating an ACR service for excluding anonymous calls without an identification element. A corresponding activation means may be provided also for an EACR service (not shown).

As also indicated in Fig. 11, there are provided means for instructing an edit function key or the like for the respective lists, i.e. for a manual introduction of additional numbers or for changing existing entries. Moreover, storing instruction means or keys are provided for storing the input instructions/data as a communication connection establishment control profile for the subscriber. In addition, the GUI may indicate costs for the activating the services, for example by allocating price information to parts of the interface related to one or more of the services.

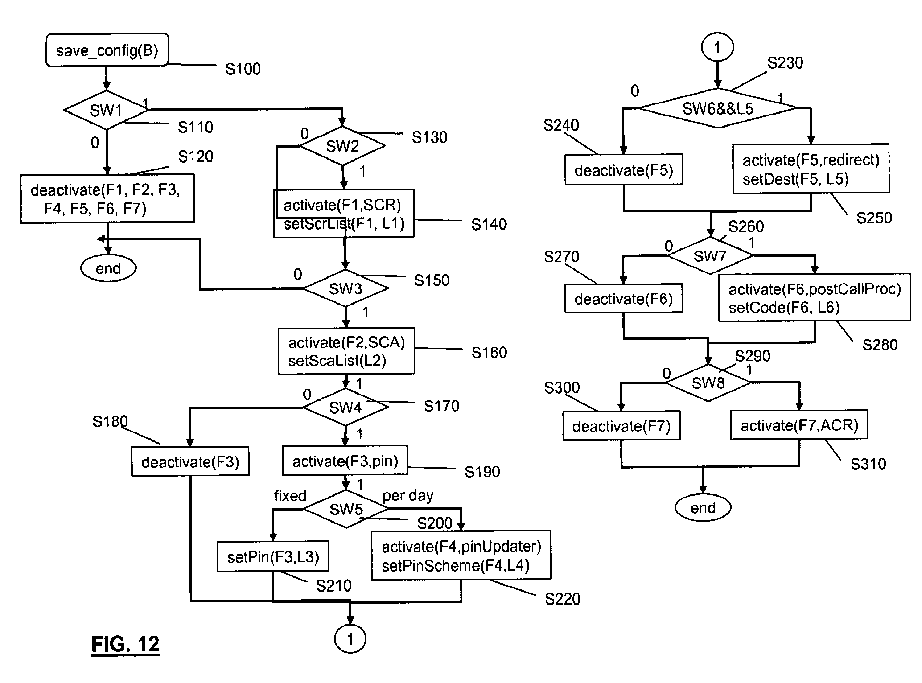

In Fig. 12, a flow chart illustrating a process flow of setting a communication connection establishment control scheme with UC prevention according to the present example of an embodiment of the invention is shown. In Fig. 1, there are defined several functions F1 to F7 which may correspond to services described above. For example, F1 may correspond to the SCR service, F2 may correspond to the SCA service, F3 may correspond to the PIN service, F4 may correspond to the PIN Update service, F5 may correspond to the Turing service using the CMB, F6 may correspond to the post call service for adding to the BL, and F7 may correspond to the ACR service. In addition, indications "0" and "1" are used for defining whether an activation means or switch SW1 to SW8 according to Fig. 11 in the GUI is turned on ("1") or off ("0").

When in step S100 the settings of the subscriber B in the communication connection establishment control profile are stored, the communication connection establishment control scheme is set in accordance with the input parameters. Therefore, in step S110, it is checked whether the UC prevention is activated at all by SW1. If it is not activated, then the functions F1 to F7 are deactivated in S120 for the further processing of a communication connection establishment control and the processing is ended.

Otherwise, in case SW1 is turned on, it is checked whether SW2 is activated or deactivated. If it is activated, the SCR service (function F1) is activated and the list entries L1 are setup in the service (step S140). Thereafter, the process proceeds to step S150. Otherwise, if it is determined in step S130 that SW2 is turned off, the process proceeds directly to S150.

In S150, it is checked whether SW3 is activated or deactivated. If it is activated, the SCA service (function F2) is activated and the list entries L2 are setup in the service (step S160). Thereafter, the process proceeds to step S170.

Otherwise, if it is determined in step S150 that SW3 is turned off, the processing is ended.

In S170, it is checked whether SW4 is activated or deactivated. If it is not activated, the PIN service (function F3) is deactivated in S180. If it is activated, the PIN service (function F3) is activated in S190. Furthermore, in order to determine the type of PIN to be used, it is checked in S200 whether a setting for a fixed PIN or a dynamic PIN on a per day basis, for example, is selected by the setting of SW5. If in step S200 a fixed PIN is determined, step S210 is executed for setting the PIN to the L3 entry. Otherwise, if in step S200 a selection of a PIN on a per day basis is determined, step S220 is executed for activating the PIN Update service (function F4) and setting the PIN according to the specified scheme based on the L4 entry.

Then, step S230 is executed for determining whether SW6 is activated and a target destination for call forwarding (to CMB) is known (either a preset number from the operator or an entry in L5). If the determination in S230 is negative (no activation of SW6 and/or no target destination being known), S240 is executed where the Turing test service (function F5) is deactivated. Otherwise, if the determination in S230 is positive (activation of SW6 and target destination being known), step S250 is executed for activating the Turing test service and for setting a call forwarding destination to the number of the CMB, for example.

Next, step S260 is executed where it is checked whether SW7 is activated or deactivated. If it is not activated, the post call service (function F6) is deactivated in S270. If it is activated, the post call service (function F6) is activated in S280 and the specified code to be used to introduce the caller identification in the blacklist is set.

Then, step S290 is executed where it is checked whether SW8 is activated or deactivated. If it is not activated, the ACR service (function F7) is deactivated in S300. If it is activated, the ACR service (function F7) is activated in S310.

Thereafter, the processing is ended.

By means of the management system defined in connection with Figs. 9 to 12, it is possible to provide a flexible and comprehensible mechanism to configure and define a communication connection establishment control profile for UC prevention. The resulting communication connection establishment control scheme may comprise one or more services which are selected by the operator as useful tools against the UC and which are individually setup by the subscriber.

It is to be noted that the management system may also include tools and/or a corresponding GUI which are used by the network operator to configure what supplementary services are offered to subscribers under the anti-UC heading, i.e. to select which types of services are part of the preliminary communication connection establishment control scheme. Furthermore, these tools may be also useful to determine how the supplementary services are combined into anti-UC scheme, i.e. with which priority they are ordered. Moreover, it is also possible to provide tools allowing further pricing settings indicating to users for example extra price tags for black-lists or white lists above a certain size.

The above described communication connection establishment control with UC prevention can be implemented, for example, a P-CSCF (a SIP server), a Voice Application Server (VAS) and the like.

For the purpose of the present invention as described herein above, it should be noted that
- an access technology via which signaling is transferred to and from a UE may be any technology by means of which a user equipment can access an access network (e.g. via a base station or generally an access node). Any present or future technology, such as WLAN (Wireless Local Access Network), WiMAX (Worldwide Interoperability for Microwave Access), Blue-Tooth, Infrared, and the like may be used; although the above technologies are mostly wireless access technologies, e.g. in different radio spectra, access technology in the sense of the present invention implies also wirebound technologies, e.g. IP based access technologies like cable networks or fixed lines but also circuit switched access technologies; access technologies may be distinguishable in at least two categories or access domains such as packet switched and circuit switched, but the existence of more than two access domains does not impede the invention being applied thereto,
- usable access networks may be any device, apparatus, unit or means by which a station, entity or other user equipment may connect to and/or utilize services offered by the access network; such services include, among others, data and/or (audio-) visual communication, data download etc.;
- a user equipment may be any device, apparatus, unit or means by which a system user or subscriber may experience services from an access network, such as a mobile phone, personal digital assistant PDA, or computer;
- method steps likely to be implemented as software code portions and being run using a processor at a network element or terminal (as examples of devices, apparatuses and/or modules thereof, or as examples of entities including apparatuses and/or modules therefor), are software code independent and can be specified using any known or future developed programming language as long as the functionality defined by the method steps is preserved;
- generally, any method step is suitable to be implemented as software or by hardware without changing the idea of the invention in terms of the functionality implemented;
- method steps and/or devices, apparatuses, units or means likely to be implemented as hardware components at a terminal or network element, or any module(s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may for example be based on any security architecture capable e.g. of authentication, authorization, keying and/or traffic protection;
- devices, apparatuses, units or means can be implemented as individual devices, apparatuses, units or means, but this does not exclude that they are implemented in a distributed fashion throughout the system, as long as the functionality of the device, apparatus, unit or means is preserved,
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

As described above, there is proposed a mechanism for controlling a communication connection establishment to a subscriber using service comprising blacklisting, whitelisting, authentication request and/or Turing test for unsolicited communications prevention. Furthermore, there is proposed a management system used to configure a corresponding communication connection establishment control on the basis of an interface for the subscriber for defining a personalized communication connection establishment control profile.

Although the present invention has been described herein before with reference to particular embodiments thereof, the present invention is not limited thereto and various modifications can be made thereto.

## Claims

1. Method comprising
setting a communication connection establishment control profile for a subscriber for handling unsolicited communication,
receiving a setup request for a communication connection from a calling party, determining whether an identification element of the requesting calling party matches a stored identification of calling parties to be rejected, indicated in the communication connection establishment control profile, and
determining whether the identification element of the requesting calling party matches a stored identification of calling parties allowed to be connected to the subscriber, indicated in the communication connection establishment control profile,
sending, if the results of the determining are negative, a request to the calling party for returning a first authentication for allowing the establishment of the communication connection, said first authentication being indicated in the communication connection establishment control profile, and
checking whether the first authentication is received.

2. Method according to claim 1, further comprising, in case the first authentication is not received, initiating sending of an announcement on the basis of information indicated in the communication connection establishment control profile to the calling party, said announcement indicating information usable for deriving a second authentication for allowing the establishment of the communication connection.

3. Method according to any of claims 1 and 2, further comprising
ending the communication connection to the calling party after sending the announcement.

4. Method according to any of claims 1 to 3, further comprising at least one of
rejecting the request for the establishment of the communication connection when the result of the determining of whether the identification element of the requesting calling party matches a stored identification of calling parties to be rejected is positive, and
allowing the establishment of the communication connection to the subscriber when the result of the determining of whether the identification element of the requesting calling party matches a stored identification of calling parties allowed to be connected to the subscriber is positive.

5. Method according to any of claims 1 to 4, further comprising
offering, when sending the announcement, the calling party to store an identification information of the calling party and/or a message for the subscriber, and
when the offer is accepted by the calling party, storing the identification information and/or the message for a retrieval by the subscriber.

6. Method according to any of claims 1 to 5, wherein
the checking whether the first authentication is received comprises at least one of
detecting whether the first authentication is received until a preset time is elapsed, and
determining whether the received first authentication matches authentication data indicated by the communication connection establishment control profile, wherein the first authentication is defined to be not received when the preset time is elapsed without receiving the first authentication or when the received first authentication does not match the authentication data.

7. Method according to any of claims 1 to 6, wherein the first authentication and the second authentication are character based authentication codes and the announcement is a speech message.

8. Method according to any of claims 1 to 7, wherein the setting of the communication connection establishment control profile comprises at least one of
providing lists specifying one or more stored identifications of calling parties to be rejected and/or one or more identifications of calling parties allowed to be connected,
providing data for specifying the first authentication and/or the second authentication, and
providing data for generating the announcement.

9. Method according to any of claims 1 to 8, further comprising at least one of
detecting whether the calling party provides identification information usable for identifying the calling party, and, when the identification information is not detected, rejecting the request for the establishment of the communication connection,
checking whether an instruction to block external communication connection establishment attempts is present, and if the instruction is present, rejecting the request for the establishment of the communication connection, and
checking whether a specific communication connection forwarding instruction is present, and, when the specific communication connection forwarding instruction is present, handling the request for the establishment of the communication connection in accordance with the specific communication connection forwarding instruction, wherein the specific communication connection forwarding instruction comprises at least one of
a permission to establish a communication connection to the subscriber only at predetermined periods of time,
an instruction to setup the communication connection to another destination,
an instruction to setup the communication connection to another destination only at predetermined periods of time, and
an instruction to send the announcement in case the result of the determining of whether the identification element of the requesting calling party matches a stored identification of calling parties allowed to be connected to the subscriber is positive.

10. The method according to claim 9, wherein the setting of the communication connection establishment control profile comprises at least one of
providing lists specifying one or more stored identifications of calling parties to be rejected and/or one or more identifications of calling parties allowed to be connected,
providing data for specifying the first authentication and/or the second authentication,
providing data for generating the announcement,
specifying the predetermined periods of time, and
providing data for specifying the other destination.

11. The method according to any of claims 1 to 10, wherein the setting of the communication connection establishment control profile further comprises
receiving instructions and/or data by an interface comprising a graphical user interface part for assigning at least one of activation commands and parameters for the communication connection establishment control profile, and
implementing the instructions and/or data in a communication connection establishment control scheme using one or more supplementary services of a communication network.

12. Apparatus comprising
a processor configured to set a communication connection establishment control profile for a subscriber for handling unsolicited communication,
a receiver configured to receive a setup request for a communication connection from a calling party,
a blacklist processor portion configured to determine whether an identification element of the requesting calling party matches a stored identification of calling parties to be rejected, indicated in the communication connection establishment control profile,
a whitelist processor portion configured to determine whether the identification element of the requesting calling party matches a stored identification of calling parties allowed to be connected to the subscriber, indicated in the communication connection establishment control profile,
a transmitter configured to send, if the determination results of the blacklist and whitelist processor portions are negative, a request to the calling party for returning a first authentication for allowing the establishment of the communication connection, said first authentication being indicated in the communication connection establishment control profile, and
an authentication processor portion configured to check whether the first authentication is received.

13. The apparatus according to claim 12, wherein the authentication processor portion is further configured, in case the first authentication is not received, to initiate a transmission of an announcement on the basis of information indicated in the communication connection establishment control profile to the calling party, said announcement indicating information usable for deriving a second authentication for allowing the establishment of the communication connection.

14. Apparatus according to any of claims 12 and 13, further comprising
a fourth processor portion configured to end the communication connection to the calling party after sending of the announcement.

15. Apparatus according to any of claims 12 to 14, wherein
the blacklist processor portion is further configured to reject the request for the establishment of the communication connection when the result of the determination of whether the identification element of the requesting calling party matches a stored identification of calling parties to be rejected is positive, and/or
the whitelist processor portion is further configured to allow the establishment of the communication connection to the subscriber when the result of the determination of whether the identification element of the requesting calling party matches a stored identification of calling parties allowed to be connected to the subscriber is positive.

16. Apparatus according to any of claims 12 to 15, wherein the authentication processor portion is further configured to initiate, when the announcement is sent, an offer for the calling party to store an identification information of the calling party and/or a message for the subscriber, and
when the offer is accepted by the calling party, to initiate storing of the identification information and/or the message for a retrieval by the subscriber.

17. Apparatus according to any of claims 12 to 16, wherein
the authentication processor portion is further configured, for checking whether the first authentication is received, to detect whether the first authentication is received until a preset time is elapsed, and/or
to determine whether the received first authentication matches authentication data indicated by the communication connection establishment control profile, wherein the third processor portion defines the first authentication to be not received when the preset time is elapsed without receiving the first authentication or when the received first authentication does not match the authentication data.

18. Apparatus according to any of claims 12 to 17, wherein the first authentication and the second authentication are character based authentication codes and the announcement is a speech message.

19. Apparatus according to any of claims 12 to 18, wherein the processor configured to set the communication connection establishment control profile is further configured to provide at least one of
lists specifying one or more stored identifications of calling parties to be rejected and/or one or more identifications of calling parties allowed to be connected,
data for specifying the first authentication and/or the second authentication, and data for generating the announcement.

20. Apparatus according to any of claims 12 to 19, further comprising at least one of
a fourth processor portion configured to detect whether the calling party provides identification information usable for identifying the calling party, and, when the identification information is not detected, to reject the request for the establishment of the communication connection,
a fifth processor portion configured to check whether an instruction to block external communication connection establishment attempts is present, and if the instruction is present, to reject the request for the establishment of the communication connection, and
a sixth processor portion configured to check whether a specific communication connection forwarding instruction is present, and, when the specific communication connection forwarding instruction is present, to initiate handling of the request for the establishment of the communication connection in accordance with the specific communication connection forwarding instruction, wherein the specific communication connection forwarding instruction comprises at least one of
a permission to establish a communication connection to the subscriber only at predetermined periods of time,
an instruction to setup the communication connection to another destination,
an instruction to setup the communication connection to another destination only at predetermined periods of time, and
an instruction to send the announcement in case the result of the determining of whether the identification element of the requesting calling party matches a stored identification of calling parties allowed to be connected to the subscriber is positive.

21. The apparatus according to claim 20, wherein the processor configured to set the communication connection establishment control profile is further configured to provide at least one of
lists specifying one or more stored identifications of calling parties to be rejected and one/or or more identifications of calling parties allowed to be connected,
data for specifying the first authentication and/or the second authentication, data for generating the announcement,
a specification of the predetermined periods of time, and
data for specifying the other destination.

22. The apparatus according to any of claims 12 to 21, wherein the processor configured to set the communication connection establishment control profile is further configured to
receive instructions and/or data by an interface comprising a graphical user interface part for assigning at least one of activation commands and parameters for the communication connection establishment control profile, and
implement the instructions and/or data in a communication connection establishment control scheme using one or more supplementary services of a communication network.

23. A computer program product for a computer, comprising software code portions for performing the steps of any of claims 1 to 11 when said product is run on the computer.

24. A computer program product according to claim 23, wherein said computer program product comprises a computer-readable medium on which said software code portions are stored.

25. A computer program product according to claim 23, wherein said computer program product is directly loadable into the internal memory of the computer and/or transmittable via a network by means of at least one of upload, download and push procedures.

## Patentansprüche

1. Verfahren, das Folgendes umfasst
Einstellen eines Steuerprofils eines Kommunikationsverbindungsaufbaus für einen Teilnehmer, um unerbetene Kommunikation zu handhaben,
Empfangen einer Aufbauanfrage für eine Kommunikationsverbindung von einem rufenden Teilnehmer,
Bestimmen, ob das Identifikationselement des anfragenden rufenden Teilnehmers mit einer gespeicherten Identifikation von rufenden Teilnehmern, die abgewiesen werden sollen, übereinstimmt, was in dem Steuerprofil eines Kommunikationsverbindungsaufbaus angezeigt ist, und
Bestimmen, ob das Identifikationselement des anfragenden rufenden Teilnehmers mit einer gespeicherten Identifikation von rufenden Teilnehmern, die zur Verbindung mit dem Teilnehmer zugelassen werden sollen, übereinstimmt, was in dem Steuerprofil eines Kommunikationsverbindungsaufbaus angezeigt ist,
Senden, wenn die Ergebnisse des Bestimmens negativ sind, einer Anfrage an den rufenden Teilnehmer, um eine erste Authentisierung für eine Zulassung des Aufbaus der Kommunikationsverbindung zurückzuschicken, wobei die erste Authentisierung in dem Steuerprofil eines Kommunikationsverbindungsaufbaus angezeigt wird, und
Prüfen, ob die erste Authentisierung empfangen worden ist.

2. Verfahren nach Anspruch 1, das ferner in dem Fall, in dem die erste Authentisierung nicht empfangen worden ist, ein Initiieren eines Sendens einer Ankündigung auf der Basis von Informationen umfasst, die in dem Steuerprofil eines Kommunikationsverbindungsaufbaus zu dem rufenden Teilnehmer angezeigt sind, wobei die Ankündigung Informationen anzeigt, die nützlich sind, um eine zweite Authentisierung für eine Zulassung des Aufbaus der Kommunikationsverbindung abzuleiten.

3. Verfahren nach einem der Ansprüche 1 und 2, das ferner Folgendes umfasst
Beenden der Kommunikationsverbindung zu dem rufenden Teilnehmer nach dem Senden der Ankündigung.

4. Verfahren nach einem der Ansprüche 1 bis 3, das ferner Folgendes umfasst:
Abweisen der Anfrage für den Aufbau der Kommunikationsverbindung, wenn das Ergebnis des Bestimmens, ob das Identifikationselement des anfragenden rufenden Teilnehmers mit einer gespeicherten Identifikation von rufenden Teilnehmern, die abgewiesen werden sollen, übereinstimmt, positiv ist, und/oder
Zulassen des Aufbaus der Kommunikationsverbindung mit dem Teilnehmer, wenn das Ergebnis des Bestimmens, ob das Identifikationselement des anfragenden rufenden Teilnehmers mit einer gespeicherten Identifikation von rufenden Teilnehmern, die zur Verbindung mit dem Teilnehmer zugelassen werden sollen, übereinstimmt, positiv ist.

5. Verfahren nach einem der Ansprüche 1 bis 4, das ferner Folgendes umfasst:
dem rufenden Teilnehmer Anbieten, Identifikationsinformationen des rufenden Teilnehmers und/oder eine Nachricht für den Teilnehmer zu speichern, wenn die Ankündigung gesendet wird, und
wenn das Angebot von dem rufenden Teilnehmer akzeptiert wird, Speichern der Identifikationsinformationen und/oder der Nachricht für ein Wiedergewinnen durch den Teilnehmer.

6. Verfahren nach einem der Ansprüche 1 bis 5, wobei:
das Prüfen, ob die erste Authentisierung empfangen ist, Folgendes umfasst:
Detektieren, ob die erste Authentisierung empfangen worden ist, bis eine Zeitvorwahl abgelaufen ist, und/oder
Bestimmen, ob die empfangene erste Authentisierung mit den Authentisierungsdaten, die durch das Steuerprofil des Kommunikationsverbindungsaufbaus angezeigt sind, übereinstimmt, wobei die erste Authentisierung als nicht empfangen definiert wird, wenn die Zeitvorwahl abgelaufen ist, ohne dass die erste Authentisierung empfangen worden ist, oder wenn die empfangene erste Authentisierung nicht mit den Authentisierungsdaten übereinstimmt.

7. Verfahren nach einem der Ansprüche 1 bis 6, wobei die erste Authentisierung und die zweite Authentisierung zeichenbasierte Authentisierungscodes sind und die Ankündigung eine Sprachnachricht ist.

8. Verfahren nach einem der Ansprüche 1 bis 7, wobei das Einstellen des Steuerprofils des Kommunikationsverbindungsaufbaus Folgendes umfasst:
Bereitstellen von Listen, die eine oder mehrere gespeicherte Identifikationen von rufenden Teilnehmern, die abgewiesen werden sollen, und/oder eine oder mehrere Identifikationen von rufenden Teilnehmern, die zur Verbindung zugelassen werden sollen, spezifizieren, und/oder
Bereitstellen von Daten, um die erste Authentisierung und/oder die zweite Authentisierung zu spezifizieren, und/oder
Bereitstellen von Daten, um die Ankündigung zu erzeugen.

9. Verfahren nach einem der Ansprüche 1 bis 8, das ferner Folgendes umfasst:
Detektieren, ob der rufende Teilnehmer Identifikationsinformationen bereitstellt, die nützlich sind, um den rufenden Teilnehmer zu identifizieren, und Abweisen der Anfrage des Aufbaus der Kommunikationsverbindung, wenn die Identifikationsinformationen nicht detektiert sind, und/oder
Prüfen, ob eine Anweisung vorhanden ist, externe Versuche zum Aufbau einer Kommunikationsverbindung zu blockieren, und Abweisen der Anfrage nach dem Aufbau der Kommunikationsverbindung, wenn die Anweisung vorhanden ist, und
Prüfen, ob eine spezifische Weiterleitungsanweisung der Kommunikationsverbindung vorhanden ist, und, wenn die spezifische Weiterleitungsanweisung der Kommunikationsverbindung vorhanden ist, Handhaben der Anfrage nach dem Aufbau der Kommunikationsverbindung gemäß der spezifischen Weiterleitungsanweisung der zu handhaben, wobei die spezifische Weiterleitungsanweisung der Kommunikationsverbindung Folgendes umfasst:
eine Erlaubnis, eine Kommunikationsverbindung zu dem Teilnehmer nur zu vorgegebenen Zeitperioden aufzubauen, und/oder
eine Anweisung, die Kommunikationsverbindung zu einer anderen Zieladresse aufzubauen, und/oder
eine Anweisung, die Kommunikationsverbindung zu einer anderen Zieladresse nur zu vorgegebenen Zeitperioden aufzubauen, und/oder
eine Anweisung, die Ankündigung in dem Fall, in dem das Ergebnis des Bestimmens, ob das Identifikationselement des anfragenden rufenden Teilnehmers mit einer gespeicherten Identifikation von rufenden Teilnehmern, die zur Verbindung mit dem Teilnehmer zugelassen werden sollen, übereinstimmt, positiv ist, zu senden.

10. Verfahren nach Anspruch 9, wobei das Einstellen des Steuerprofils des Kommunikationsverbindungsaufbaus Folgendes umfasst:
Bereitstellen von Listen, die eine oder mehrere gespeicherte Identifikationen von rufenden Teilnehmern, die abgewiesen werden sollen, und/oder eine oder mehrere Identifikationen von rufenden Teilnehmern, die zur Verbindung zugelassen werden sollen, spezifizieren, und/oder
Bereitstellen von Daten, um die erste Authentisierung und/oder die zweite Authentisierung zu spezifizieren, und/oder
Bereitstellen von Daten, um die Ankündigung zu erzeugen, und/oder
Spezifizieren der vorgegebenen Zeitperioden, und
Bereitstellen von Daten, um die andere Zieladresse zu spezifizieren.

11. Verfahren nach einem der Ansprüche 1 bis 10, wobei das Einstellen des Steuerprofils des Kommunikationsverbindungsaufbaus ferner Folgendes umfasst:
Empfangen von Anweisungen und/oder Daten durch eine Schnittstelle, die einen Teil einer grafischen Anwenderschnittstelle umfasst, um mindestens einen der Aktivierungsbefehle und Parameter dem Steuerprofil des Kommunikationsverbindungsaufbaus zuzuordnen, und
Implementieren der Anweisungen und/oder Daten in einem Steuerschema des Kommunikationsverbindungsaufbaus unter Verwendung eines oder mehrerer Ergänzungsdienste eines Kommunikationsnetzes.

12. Vorrichtung, die Folgendes umfasst
einen Prozessor, der konfiguriert ist, ein Steuerprofil eines Kommunikationsverbindungsaufbaus für einen Teilnehmer einzustellen, um unerbetene Kommunikation zu handhaben,
einen Empfänger, der konfiguriert ist, eine Aufbauanfrage für eine Kommunikationsverbindung von einem rufenden Teilnehmer zu empfangen,
eine schwarze Liste eines Prozessorabschnitts, der konfiguriert ist, zu bestimmen, ob das Identifikationselement des anfragenden rufenden Teilnehmers mit einer gespeicherten Identifikation von rufenden Teilnehmern, die abgewiesen werden sollen, übereinstimmt, was in dem Steuerprofil eines Kommunikationsverbindungsaufbaus angezeigt ist, und
eine weiße Liste eines Prozessorabschnitts, der konfiguriert ist, zu bestimmen, ob das Identifikationselement des anfragenden rufenden Teilnehmers mit einer gespeicherten Identifikation von rufenden Teilnehmern, die zur Verbindung mit dem Teilnehmer zugelassen werden sollen, übereinstimmt, was in dem Steuerprofil eines Kommunikationsverbindungsaufbaus angezeigt ist,
eine Übertragungsvorrichtung, die konfiguriert ist, dann, wenn die Ergebnisse des Bestimmens der Prozessorabschnitte der schwarzen Liste und der weißen Liste negativ sind, eine Anfrage an den rufenden Teilnehmer zu senden, um eine erste Authentisierung für eine Zulassung des Aufbaus der Kommunikationsverbindung zurückzuschicken, wobei die erste Authentisierung in dem Steuerprofil eines Kommunikationsverbindungsaufbaus angezeigt wird, und
einen Prozessorabschnitt für eine Authentisierung, der konfiguriert ist, zu prüfen, ob die erste Authentisierung empfangen worden ist.

13. Vorrichtung nach Anspruch 12, wobei der Prozessorabschnitt für die Authentisierung ferner konfiguriert ist, in dem Fall, in dem die erste Authentisierung nicht empfangen worden ist, eine Übertragung einer Ankündigung auf der Basis von Informationen zu initiieren, die in dem Steuerprofil eines Kommunikationsverbindungsaufbaus zu dem rufenden Teilnehmer angezeigt sind, wobei die Ankündigung Informationen anzeigt, die nützlich sind, um eine zweite Authentisierung für eine Zulassung des Aufbaus der Kommunikationsverbindung abzuleiten.

14. Vorrichtung nach einem der Ansprüche 12 bis 13, die Folgendes umfasst:
einen vierten Prozessorabschnitt, der konfiguriert ist, die Kommunikationsverbindung zu dem rufenden Teilnehmer nach dem Senden der Ankündigung zu beenden.

15. Vorrichtung nach einem der Ansprüche 12 bis 14, wobei
der Prozessorabschnitt der schwarzen Liste ferner konfiguriert ist, die Anfrage für den Aufbau der Kommunikationsverbindung abzuweisen, wenn das Ergebnis des Bestimmens, ob das Identifikationselement des anfragenden rufenden Teilnehmers mit einer gespeicherten Identifikation von rufenden Teilnehmern, die abgewiesen werden sollen, übereinstimmt, positiv ist, und/oder
der Prozessorabschnitt der weißen Liste ferner konfiguriert ist, den Aufbau der Kommunikationsverbindung mit dem Teilnehmer zuzulassen, wenn das Ergebnis des Bestimmens, ob das Identifikationselement des anfragenden rufenden Teilnehmers mit einer gespeicherten Identifikation von rufenden Teilnehmern, die zur Verbindung mit dem Teilnehmer zugelassen werden sollen, übereinstimmt, positiv ist.

16. Vorrichtung nach einem der Ansprüche 12 bis 15, wobei
der Prozessorabschnitt für die Authentisierung ferner konfiguriert ist, zu veranlassen, dem rufenden Teilnehmer anzubieten, Identifikationsinformationen des rufenden Teilnehmers und/oder eine Nachricht für den Teilnehmer zu speichern, wenn die Ankündigung gesendet wird, und
wenn das Angebot von dem rufenden Teilnehmer akzeptiert wird, zu veranlassen, die Identifikationsinformationen und/oder die Nachricht für ein Wiedergewinnen durch den Teilnehmer zu speichern.

17. Vorrichtung nach einem der Ansprüche 12 bis 16, wobei
der Prozessorabschnitt für die Authentisierung ferner konfiguriert ist, zu prüfen, ob die erste Authentisierung empfangen worden ist, um zu detektieren, ob die erste Authentisierung empfangen worden ist, bis eine Zeitvorwahl abgelaufen ist, und/oder
zu bestimmen, ob die empfangene erste Authentisierung mit den Authentisierungsdaten, die durch das Steuerprofil des Kommunikationsverbindungsaufbaus angezeigt werden, übereinstimmt, wobei der dritte Prozessorabschnitt die erste Authentisierung als nicht empfangen definiert, wenn die Zeitvorwahl abgelaufen ist, ohne dass die erste Authentisierung empfangen worden ist, oder wenn die empfangene erste Authentisierung nicht mit den Authentisierungsdaten übereinstimmt.

18. Vorrichtung nach einem der Ansprüche 12 bis 17, wobei die erste Authentisierung und die zweite Authentisierung zeichenbasierte Authentisierungscodes sind und die Ankündigung eine Sprachbotschaft ist.

19. Vorrichtung nach einem der Ansprüche 12 bis 18, wobei der Prozessor konfiguriert ist, das Steuerprofil des Kommunikationsverbindungsaufbaus einzustellen, und ferner konfiguriert ist, Folgendes bereitzustellen
Listen, die eine oder mehrere gespeicherte Identifikationen von rufenden Teilnehmern, die abgewiesen werden sollen, und/oder eine oder mehrere Identifikationen von rufenden Teilnehmern, die zur Verbindung zugelassen werden sollen, spezifizieren, und/oder
Daten, um die erste Authentisierung und/oder die zweite Authentisierung zu spezifizieren, und/oder
Daten, um die Ankündigung zu erzeugen.

20. Vorrichtung nach einem der Ansprüche 12 bis 19, die ferner umfasst:
einen vierten Prozessorabschnitt, der konfiguriert ist, zu detektieren, ob der rufende Teilnehmer Identifikationsinformationen bereitstellt, die nützlich sind, um den rufenden Teilnehmer zu identifizieren, und die Anfrage des Aufbaus der Kommunikationsverbindung abzuweisen, wenn die Identifikationsinformationen nicht detektiert werden, und/oder
einen fünften Prozessorabschnitt, der konfiguriert ist, zu prüfen, ob eine Anweisung vorhanden ist, externe Versuche zum Aufbau einer Kommunikationsverbindung zu blockieren und, wenn die Anweisung vorhanden ist, die Anfrage nach dem Aufbau der Kommunikationsverbindung abzuweisen, und/oder
einen sechsten Prozessorabschnitt, der konfiguriert ist, zu prüfen, ob eine spezifische Weiterleitungsanweisung der Kommunikationsverbindung vorhanden ist, und, wenn die spezifische Weiterleitungsanweisung der Kommunikationsverbindung vorhanden ist, eine Handhabung der Anfrage nach dem Aufbau der Kommunikationsverbindung gemäß der spezifischen Weiterleitungsanweisung der Kommunikationsverbindung zu initiieren, wobei die spezifische Weiterleitungsanweisung der Kommunikationsverbindung Folgendes umfasst:
eine Erlaubnis, eine Kommunikationsverbindung zu dem Teilnehmer nur zu vorgegebenen Zeitperioden aufzubauen, und/oder
eine Anweisung, die Kommunikationsverbindung zu einer anderen Zieladresse aufzubauen, und/oder
eine Anweisung, die Kommunikationsverbindung zu einer anderen Zieladresse nur zu vorgegebenen Zeitperioden aufzubauen, und/oder
eine Anweisung, die Ankündigung in dem Fall, in dem das Ergebnis des Bestimmens, ob das Identifikationselement des anfragenden rufenden Teilnehmers mit einer gespeicherten Identifikation von rufenden Teilnehmern, die zur Verbindung mit dem Teilnehmer zugelassen werden sollen, übereinstimmt, positiv ist, zu senden.

21. Vorrichtung nach Anspruch 20, wobei der Prozessor konfiguriert ist, das Steuerprofil des Kommunikationsverbindungsaufbaus einzustellen, und ferner konfiguriert ist, Folgendes bereitzustellen:
Listen, die eine oder mehrere gespeicherte Identifikationen von rufenden Teilnehmern, die abgewiesen werden sollen, und/oder eine oder mehrere Identifikationen von rufenden Teilnehmern, die zur Verbindung zugelassen werden sollen, spezifizieren, und/oder
Daten, um die erste Authentisierung und/oder die zweite Authentisierung zu spezifizieren, und/oder
Daten, um die Ankündigung zu erzeugen, und/oder
eine Spezifikation der vorgegebenen Zeitperioden, und/oder
Daten, um die andere Zieladresse zu spezifizieren.

22. Vorrichtung nach einem der Ansprüche 12 bis 21, wobei der Prozessor konfiguriert ist, das Steuerprofil des Kommunikationsverbindungsaufbaus einzustellen, und ferner konfiguriert ist,
Anweisungen und/oder Daten durch eine Schnittstelle zu empfangen, die einen Teil einer grafischen Anwenderschnittstelle umfasst, um mindestens einen der Aktivierungsbefehle und Parameter dem Steuerprofil des Kommunikationsverbindungsaufbaus zuzuordnen, und
Anweisungen und/oder Daten in einem Steuerschema des Kommunikationsverbindungsaufbaus unter Verwendung eines oder mehrerer Dienste eines Kommunikationsnetzes zu implementieren.

23. Computerprogrammprodukt für einen Computer, das Computer-Softwarecodeabschnitte umfasst, um die Schritte nach einem der Ansprüche 1 bis 11 durchzuführen, wenn das Produkt auf dem Computer läuft.

24. Computerprogrammprodukt nach Anspruch 23, wobei das Computerprogrammprodukt ein computerlesbares Medium umfasst, auf dem die Softwarecodeabschnitte gespeichert sind.

25. Computerprogrammprodukt nach Anspruch 23, wobei das Computerprogrammprodukt direkt in den internen Speicher des Computers geladen werden kann und/oder über ein Netz mittels eines Hochlade- und/oder Herunterladeverfahrens und/oder über ein Push-Verfahren übertragen werden kann.

## Revendications

1. Un procédé comprenant
la définition d'un profil de commande d'établissement de connexion de communication pour un abonné destiné à la gestion d'une communication non sollicitée,
la réception d'une demande d'établissement pour une connexion de communication provenant d'un interlocuteur appelant,
la détermination si un élément d'identification de l'interlocuteur appelant demandeur correspond à une identification conservée en mémoire d'interlocuteurs appelants à rejeter indiquée dans le profil de commande d'établissement de connexion de communication, et
la détermination si l'élément d'identification de l'interlocuteur appelant demandeur correspond à une identification conservée en mémoire d'interlocuteurs appelants autorisés à être connectés à l'abonné indiquée dans le profil de commande d'établissement de connexion de communication,
l'envoi, si les résultats de la détermination sont négatifs, d'une demande à l'interlocuteur appelant de renvoi d'une première authentification destinée à autoriser l'établissement de la connexion de communication, ladite première authentification étant indiquée dans le profil de commande d'établissement de connexion de communication, et
la vérification si la première authentification est reçue.

2. Le procédé selon la revendication 1, comprenant en outre, dans le cas où la première authentification n'est pas reçue, le déclenchement de l'envoi d'une annonce en fonction d'informations indiquées dans le profil de commande d'établissement de connexion de communication à l'interlocuteur appelant, ladite annonce indiquant des informations utilisables pour dériver une deuxième authentification destinée à autoriser l'établissement de la connexion de communication.

3. Le procédé selon l'une quelconque des revendications 1 et 2, comprenant en outre
la terminaison de la connexion de communication avec l'interlocuteur appelant après l'envoi de l'annonce.

4. Le procédé selon l'une quelconque des revendications 1 à 3, comprenant en outre au moins une des opérations suivantes :
le rejet de la demande d'établissement de la connexion de communication lorsque le résultat de la détermination si l'élément d'identification de l'interlocuteur appelant demandeur correspond à une identification conservée en mémoire d'interlocuteurs appelants à rejeter est positif, et
l'autorisation de l'établissement de la connexion de communication avec l'abonné lorsque le résultat de la détermination si l'élément d'identification de l'interlocuteur appelant demandeur correspond à une identification conservée en mémoire d'interlocuteurs appelants autorisés à être connectés à l'abonné est positif.

5. Le procédé selon l'une quelconque des revendications 1 à 4, comprenant en outre
la proposition, lors de l'envoi de l'annonce, à l'interlocuteur appelant de placer en mémoire une information d'identification de l'interlocuteur appelant et/ou un message pour l'abonné, et
lorsque la proposition est acceptée par l'interlocuteur appelant, la mise en mémoire de l'information d'identification et/ou du message pour récupération par l'abonné.

6. Le procédé selon l'une quelconque des revendications 1 à 5, dans lequel
la vérification si la première authentification est reçue comprend au moins une des opérations suivantes :
la détection si la première authentification est reçue avant qu'une durée prédéfinie ne se soit écoulée, et
la détermination si la première authentification reçue correspond à des données d'authentification indiquées par le profil de commande d'établissement de connexion de communication, la première authentification étant déclarée ne pas être reçue lorsque la durée prédéfinie s'est écoulée sans la réception de la première authentification ou lorsque la première authentification reçue ne correspond pas aux données d'authentification.

7. Le procédé selon l'une quelconque des revendications 1 à 6, dans lequel la première authentification et la deuxième authentification sont des codes d'authentification basés sur des caractères et l'annonce est un message vocal.

8. Le procédé selon l'une quelconque des revendications 1 à 7, dans lequel la définition du profil de commande d'établissement de connexion de communication comprend au moins une des opérations suivantes :
la fourniture de listes spécifiant une ou plusieurs identifications conservées en mémoire d'interlocuteurs appelants à rejeter et/ou une ou plusieurs identifications d'interlocuteurs appelants autorisés à être connectés,
la fourniture de données destinées à spécifier la première authentification et/ou la deuxième authentification, et
la fourniture de données destinées à générer l'annonce.

9. Le procédé selon l'une quelconque des revendications 1 à 8, comprenant en outre au moins une des opérations suivantes :
la détection si l'interlocuteur appelant fournit une information d'identification utilisable pour identifier l'interlocuteur appelant, et, lorsque l'information d'identification n'est pas détectée, le rejet de la demande d'établissement de la connexion de communication,
la vérification si une instruction destinée à bloquer des tentatives d'établissement de connexion de communication externe est présente, et si l'instruction est présente, le rejet de la demande d'établissement de la connexion de communication, et
la vérification si une instruction de transmission de connexion de communication spécifique est présente, et, lorsque l'instruction de transmission de connexion de communication spécifique est présente, la gestion de la demande d'établissement de la connexion de communication conformément à l'instruction de transmission de connexion de communication spécifique, l'instruction de transmission de connexion de communication spécifique comprenant au moins une des opérations suivantes :
une autorisation d'établir une connexion de communication avec l'abonné uniquement à des périodes temporelles prédéterminées,
une instruction d'établissement de la connexion de communication avec une autre destination,
une instruction d'établissement de la connexion de communication avec une autre destination uniquement à des périodes temporelles prédéterminées, et
une instruction d'envoi de l'annonce dans le cas où le résultat de la détermination si l'élément d'identification de l'interlocuteur appelant demandeur correspond à une identification conservée en mémoire d'interlocuteurs appelants autorisés à être connectés à l'abonné est positif.

10. Le procédé selon la revendication 9, dans lequel la définition du profil de commande d'établissement de connexion de communication comprend au moins une des opérations suivantes :
la fourniture de listes spécifiant une ou plusieurs identifications conservées en mémoire d'interlocuteurs appelants à rejeter et/ou une ou plusieurs identifications d'interlocuteurs appelants autorisés à être connectés,
la fourniture de données destinées à spécifier la première authentification et/ou la deuxième authentification,
la fourniture de données destinées à générer l'annonce,
la spécification des périodes temporelles prédéterminées, et
la fourniture de données destinées à spécifier l'autre destination.

11. Le procédé selon l'une quelconque des revendications 1 à 10, dans lequel la définition du profil de commande d'établissement de connexion de communication comprend en outre
la réception d'instructions et/ou de données par une interface comprenant une partie interface utilisateur graphique destinée à attribuer au moins un élément parmi commandes d'activation et paramètres au profil de commande d'établissement de connexion de communication, et
la mise en oeuvre des instructions et/ou des données dans un mécanisme de commande d'établissement de connexion de communication au moyen d'un ou plusieurs services supplémentaires d'un réseau de communication.

12. Un appareil comprenant
un processeur configuré de façon à définir un profil de commande d'établissement de connexion de communication pour un abonné destiné à la gestion d'une communication non sollicitée,
un récepteur configuré de façon à recevoir une demande d'établissement pour une connexion de communication provenant d'un interlocuteur appelant,
une partie processeur de liste noire configurée de façon à déterminer si un élément d'identification de l'interlocuteur appelant demandeur correspond à une identification conservée en mémoire d'interlocuteurs appelants à rejeter indiquée dans le profil de commande d'établissement de connexion de communication,
une partie processeur de liste blanche configurée de façon à déterminer si l'élément d'identification de l'interlocuteur appelant demandeur correspond à une identification conservée en mémoire d'interlocuteurs appelants autorisés à être connectés à l'abonné indiquée dans le profil de commande d'établissement de connexion de communication,
un émetteur configuré de façon à envoyer, si les résultats de détermination des parties processeurs de liste noire et de liste blanche sont négatifs, une demande à l'interlocuteur appelant de renvoi d'une première authentification destinée à autoriser l'établissement de la connexion de communication, ladite première authentification étant indiquée dans le profil de commande d'établissement de connexion de communication, et
une partie processeur d'authentification configurée de façon à vérifier si la première authentification est reçue.

13. L'appareil selon la revendication 12, dans lequel la partie processeur d'authentification est configurée en outre, dans le cas où la première authentification n'est pas reçue, de façon à déclencher une transmission d'une annonce en fonction d'informations indiquées dans le profil de commande d'établissement de connexion de communication à l'interlocuteur appelant, ladite annonce indiquant des informations utilisables pour dériver une deuxième authentification destinée à autoriser l'établissement de la connexion de communication.

14. Un appareil selon l'une quelconque des revendications 12 et 13, comprenant en outre
une quatrième partie processeur configurée de façon à terminer la connexion de communication avec l'interlocuteur appelant après l'envoi de l'annonce.

15. Un appareil selon l'une quelconque des revendications 12 à 14, dans lequel
la partie processeur de liste noire est configurée en outre de façon à rejeter la demande d'établissement de la connexion de communication lorsque le résultat de la détermination si l'élément d'identification de l'interlocuteur appelant demandeur correspond à une identification conservée en mémoire d'interlocuteurs appelants à rejeter est positif, et/ou
la partie processeur de liste blanche est configurée en outre de façon à autoriser l'établissement de la connexion de communication avec l'abonné lorsque le résultat de la détermination si l'élément d'identification de l'interlocuteur appelant demandeur correspond à une identification conservée en mémoire d'interlocuteurs appelants autorisés à être connectés à l'abonné est positif.

16. Un appareil selon l'une quelconque des revendications 12 à 15, dans lequel la partie processeur d'authentification est configurée en outre de façon à déclencher, lorsque l'annonce est envoyée, une proposition à l'interlocuteur appelant de placer en mémoire une information d'identification de l'interlocuteur appelant et/ou un message pour l'abonné, et
lorsque la proposition est acceptée par l'interlocuteur appelant, de façon à déclencher la mise en mémoire de l'information d'identification et/ou du message pour récupération par l'abonné.

17. Un appareil selon l'une quelconque des revendications 12 à 16, dans lequel
la partie processeur d'authentification est configurée en outre, pour la vérification si la première authentification est reçue, de façon à détecter si la première authentification est reçue avant qu'une durée prédéfinie ne se soit écoulée, et/ou
de façon à déterminer si la première authentification reçue correspond à des données d'authentification indiquées par le profil de commande d'établissement de connexion de communication, la troisième partie processeur définissant la première authentification ne pas être reçue lorsque la durée prédéfinie est écoulée sans la réception de la première authentification ou lorsque la première authentification reçue ne correspond pas aux données d'authentification.

18. Un appareil selon l'une quelconque des revendications 12 à 17, dans lequel la première authentification et la deuxième authentification sont des codes d'authentification basés sur des caractères et l'annonce est un message vocal.

19. Un appareil selon l'une quelconque des revendications 12 à 18, dans lequel le processeur configuré de façon à définir le profil de commande d'établissement de connexion de communication est configuré en outre de façon à fournir au moins un des éléments suivants :
des listes spécifiant une ou plusieurs identifications conservées en mémoire d'interlocuteurs appelants à rejeter et/ou une ou plusieurs identifications d'interlocuteurs appelants autorisés à être connectés,
des données destinées à spécifier la première authentification et/ou la deuxième authentification, et
des données destinées à générer l'annonce.

20. Un appareil selon l'une quelconque des revendications 12 à 19, comprenant en outre au moins un des éléments suivants :
une quatrième partie processeur configurée de façon à détecter si l'interlocuteur appelant fournit une information d'identification utilisable pour identifier l'interlocuteur appelant, et, lorsque l'information d'identification n'est pas détectée, de façon à rejeter la demande d'établissement de la connexion de communication,
une cinquième partie processeur configurée de façon à vérifier si une instruction destinée à bloquer des tentatives d'établissement de connexion de communication externe est présente, et si l'instruction est présente, de façon à rejeter la demande d'établissement de la connexion de communication, et
une sixième partie processeur configurée de façon à vérifier si une instruction de transmission de connexion de communication spécifique est présente, et, lorsque l'instruction de transmission de connexion de communication spécifique est présente, de façon à déclencher la gestion de la demande d'établissement de la connexion de communication conformément à l'instruction de transmission de connexion de communication spécifique, l'instruction de transmission de connexion de communication spécifique comprenant au moins un des éléments suivants :
une autorisation d'établissement d'une connexion de communication avec l'abonné uniquement à des périodes temporelles prédéterminées,
une instruction d'établissement de la connexion de communication avec une autre destination,
une instruction d'établissement de la connexion de communication avec une autre destination uniquement à des périodes temporelles prédéterminées, et
une instruction d'envoi de l'annonce dans le cas où le résultat de la détermination si l'élément d'identification de l'interlocuteur appelant demandeur correspond à une identification conservée en mémoire d'interlocuteurs appelants autorisés à être connectés à l'abonné est positif.

21. L'appareil selon la revendication 20, dans lequel le processeur configuré de façon à définir le profil de commande d'établissement de connexion de communication est configuré en outre de façon à fournir au moins un des éléments suivants :
des listes spécifiant une ou plusieurs identifications conservées en mémoire d'interlocuteurs appelants à rejeter et une ou plusieurs identifications d'interlocuteurs appelants autorisés à être connectés,
des données destinées à spécifier la première authentification et/ou la deuxième authentification,
des données destinées à générer l'annonce,
une spécification des périodes temporelles prédéterminées, et
des données destinées à spécifier l'autre destination.

22. L'appareil selon l'une quelconque des revendications 12 à 21, dans lequel le processeur configuré de façon à définir le profil de commande d'établissement de connexion de communication est configuré en outre de façon à
recevoir des instructions et/ou des données par une interface comprenant une partie interface utilisateur graphique destinée à attribuer au moins un élément parmi commandes d'activation et paramètres au profil de commande d'établissement de connexion de communication, et
mettre en oeuvre les instructions et/ou données dans un mécanisme de commande d'établissement de connexion de communication au moyen d'un ou plusieurs services supplémentaires d'un réseau de communication.

23. Un produit de programme informatique pour un ordinateur contenant des parties de code logiciel destinées à exécuter les étapes selon l'une quelconque des revendications 1 à 11 lorsque ledit produit est exécuté sur l'ordinateur.

24. Un produit de programme informatique selon la revendication 23, dans lequel ledit produit de programme informatique comprend un support lisible par ordinateur sur lequel lesdites parties de code logiciel sont conservées en mémoire.

25. Un produit de programme informatique selon la revendication 23, dans lequel ledit produit de programme informatique peut être chargé directement dans la mémoire interne de l'ordinateur et/ou être transmis par l'intermédiaire d'un réseau au moyen d'au moins une procédure parmi téléchargement vers l'amont, téléchargement vers l'aval et procédure de pousser.
